(19) Europäisches Patentamt
European Patent Office
Office européen des brevets

(11) **EP 3 708 993 B1**

(12) **EUROPÄISCHE PATENTSCHRIFT**

(45) Veröffentlichungstag und Bekanntmachung des Hinweises auf die Patenterteilung:
**02.10.2024 Patentblatt 2024/40**

(21) Anmeldenummer: **20167153.4**

(22) Anmeldetag: **17.08.2018**

(51) Internationale Patentklassifikation (IPC):
**G01M 11/02** *(2006.01)* **G02C 13/00** *(2006.01)*

(52) Gemeinsame Patentklassifikation (CPC):
**G02C 13/003; G01M 11/0207; G01M 11/0221**

(54) **VERFAHREN UND VORRICHTUNGEN ZUR BESTIMMUNG VON POSITION UND/ODER ORIENTIERUNG EINES BRILLENGLASES AUF EINEM HALTER**

METHOD AND DEVICES FOR DETERMINING THE POSITION AND / OR ORIENTATION OF A SPECTACLE LENS ON A HOLDER

PROCÉDÉ ET DISPOSITIFS DE DÉTERMINATION DE LA POSITION ET/OU DE L'ORIENTATION D'UN VERRE DE LUNETTES SUR UN SUPPORT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.08.2017 DE 102017118908**

(43) Veröffentlichungstag der Anmeldung:
**16.09.2020 Patentblatt 2020/38**

(62) Dokumentnummer(n) der früheren Anmeldung(en) nach Art. 76 EPÜ:
**18765362.1 / 3 669 157**

(73) Patentinhaber: **Carl Zeiss Vision International GmbH**
**73430 Aalen (DE)**

(72) Erfinder:
• **HANßEN, Adalbert**
**73434 Aalen (DE)**
• **ROTHE, Elmar**
**73447 Oberkochen (DE)**

(74) Vertreter: **Kraus & Lederer PartGmbB**
**Thomas-Wimmer-Ring 15**
**80539 München (DE)**

(56) Entgegenhaltungen:

| | |
|---|---|
| **EP-A1- 1 646 855** | **EP-A2- 2 597 451** |
| **EP-B1- 1 646 855** | **DE-A1- 102005 021 654** |
| **DE-A1- 102013 219 838** | **DE-A1- 102014 005 281** |
| **US-A1- 2007 091 262** | **US-A1- 2014 352 885** |

**Beschreibung**

Die vorliegende Anmeldung betrifft Verfahren und Vorrichtungen zur Bestimmung einer Position und/oder Orientierung eines Brillenglases auf einem Halter. Insbesondere betrifft die vorliegende Erfindung solche Verfahren und Vorrichtungen, bei welchen Position und/oder Orientierung des Brillenglases bestimmt werden, um eine Stempelfigur korrekt auf dem Brillenglas anbringen zu können. Unter Position versteht man dabei den Ort, an welchem sich ein Objekt im Raum befindet. Die Orientierung gibt die Ausrichtung des Objekts an diesem Ort an. Die Kombination von Position und Orientierung wird manchmal, insbesondere in der Robotik, auch als Pose bezeichnet (vgl. DIN EN ISO 8373:2012-03).

Beim Einschleifen von Brillengläsern verwendet ein Optiker Bezugspunkte auf dem Brillenglas. Das Einschleifen bezeichnet dabei einen Vorgang, bei welchem das Brillenglas für eine gewählte Fassung passend gemacht wird und zentriert wird. Vor dem Einschleifen haben Brillengläser typischerweise eine kreisrunde oder eine elliptische Form. Durch das Einschleifen wird dem Brillenglas also eine Form gegeben, die in die gewählte Fassung passt. Die Zentrierung richtet dabei das Brillenglas korrekt aus, sodass die beabsichtigte optische Wirkung für die Person, die die Brille letztendlich trägt, erzielt wird.

Die Bezugspunkte auf dem Brillenglas werden dabei bei sphärischen oder torischen Brillengläsern unter einem Scheitelbrechwertmesser ermittelt und mit einer Anzeichenvorrichtung, auch als Anpunkteinrichtung bezeichnet, auf dem Brillenglas markiert (siehe z.B. "Handbuch der Augenoptik", Herausgegeben von Carl Zeiss 7082 Oberkochen, neu bearbeitet von Dr. Helmut Goersch, 3. Auflage 1987, Seite 220). Als Bezugspunkt wird dabei insbesondere ein optischer Mittelpunkt verwendet, bei dem ein senkrecht eintretender Strahl ungebrochen durch das Brillenglas geht.

Bei Gleitsichtgläsern ist diese einfache Rekonstruktion von Bezugspunkten durch einen Scheitelbrechwertmesser nicht oder nicht ohne Weiteres möglich. Die Bezugspunkte eines Gleitsichtglases sind nicht definiert wie bei einem sphärischen oder torischen Glas, bei denen der oben erwähnte optische Mittelpunkt als Bezugspunkt verwendbar ist, sondern sind bei Gleitsichtgläsern Punkte, deren Lage durch ein Design des Brillenglases festgelegt ist. Bezugspunkte sind z.B. der der Nahbezugspunkt (vgl. DIN 58208:2013-10 Ziffer 3), der Fernbezugspunkt (vgl. DIN EN ISO 13666: 2012; Ziffern 5.15) und der Prismenbezugspunkt (vgl. DIN EN ISO 13666: 2012, Ziffern 14.2.12) eines Gleitsichtbrillenglases. Diese sind mit Scheitelbrechwertmessen nicht zu bestimmen.

Der Brillenglasdesigner kann die Lage des Fernbezugspunkts oder Nahbezugspunkts und auch des Prismenbezugspunkts frei festlegen. Bei den einzelnen Brillenglasherstellern haben sich dafür Konventionen herausgebildet, die nicht notwendig für alle Brillengläser aus ihrem Lieferprogramm gleich sind, sondern sogar nach Produktart unterschiedlich sein können. Die technische Dokumentation der Hersteller beschreibt, wo diese Bezugspunkte auf dem Glas liegen.

Üblicherweise misst man am Prismenbezugspunkt die verordnete prismatische Wirkung überlagert mit dem Dickenreduktionsprisma, das beidäugig gleich ist und nur in vertikaler Richtung wirkt. Das Dickenreduktionsprisma soll die Dicke des Brillenglases reduzieren und ist in dem oben zitierten "Handbuch für Augenoptik", Seite 118 erläutert. Die sich bei dieser Messung ergebenden prismatischen Messwerte (angegeben z.B. als Prisma in cm/m und Basis als Winkel im TABO (Technischer Ausschuss für Brillengläser)-Schema; mittels dieses Schemas sind Winkel eindeutig festgelegt), die ein Brillenglas haben soll, sind auf der Verpackung angegeben.

Anders als beim optischen Mittelpunkt eines sphärischen oder torischen Brillenglases gibt es bei Gleitsichtgläsern keine durch eine Norm definierte Strahlablenkung Null an einem der Bezugspunkte, auch fordert keine Norm, dass sich dort bei einer Vermessung mit einem Scheitelbrechwertmesser ein Minimum einer gemessenen astigmatischen Wirkung ergibt.

Nach der Norm DIN EN ISO 898-2 (2004) Kapitel 7.1 werden daher Gleitsichtgläser mit zwei Permanentmarkierungen versehen (Siehe auch DIN EN ISO 13666: 2012 14.2). Umgangssprachlich werden die Permanentmarkierungen, weil sie früher als Gravuren angebracht wurden, auch als Permanentgravuren bezeichnet. Nachdem sie heutzutage oft mit Lasern angebracht werden, ist auch der Begriff Signierung oder Signierzeichen für alle Arten von Markierungen auf dem Brillenglas geläufig. Der Punkt in der Mitte zwischen diesen Permanentmarkierungen wird als ERP (vom Englischen Engraving Reference Point, Gravurbezugspunkt) bezeichnet. Bei Gleitsichtgläsern von Zeiss ist dieser ERP zugleich der oben erwähnte Prismenbezugspunkt. Die Permanentmarkierungen liegen z.B. 17 Millimeter rechts und links des ERP.

Über die Lage dieser Permanentmarkierungen lässt sich ein Koordinatensystem auf dem Brillenglas rekonstruieren: Die Mitte dazwischen bei senkrechter Betrachtung von der Glasvorderseite bestimmt den Koordinatenursprung, die Richtung von der linken zur rechten Permanentmarkierung bestimmt die positive X-Richtung. Die Position der oben erwähnten Bezugspunkte wird von Brillenglasherstellern dann üblicherweise in diesem Koordinatensystem angegeben.

Beispielsweise liegen der Nah- und der Fernbezugspunkt in einem solchen Koordinatensystem an Stellen, die der Hersteller festgelegt hat. Der Nah- und der Fernbezugspunkt spielen dann eine Rolle, wenn die Wirkung eines Gleitsichtbrillenglases nachgemessen werden soll: An diesen beiden Punkten müssen dann die Messwerte auftreten, die der Optikdesigner vor der Herstellung des Brillenglases bestimmt hat, und die üblicherweise in den zum Brillenglas gehörenden Dokumenten, zum Beispiel auf der Verpackung, angegeben sind.

Zudem empfiehlt die DIN EN ISO 8980-2 (2004) in Kapitel 7.2, noch eine nicht dauerhafte Kennzeichnung (d. h. eine Kennzeichnung, die entfernt werden kann, sodass sie in der fertigen Brille nicht mehr vorhanden ist), welche umgangssprachlich als Stempelung oder Stempelfigur bezeichnet wird, auch wenn sie mit anderen Verfahren, beispielsweise einem Inkjet-Druckverfahren, statt einem Stempel auf dem Brillenglas angebracht wird. Im Folgenden wird der Begriff "Stempelung" verwendet, um auf diese nicht dauerhafte Kennzeichnung gemäß DIN EN ISO 8990-2 (2004), Kapitel 7.2., Bezug zu nehmen.

Diese Stempelung enthält:

    1. eine Markierung, die zum Ausrichten des Brillenglases dient
    2. eine Markierung des Fernbezugspunkts,
    3. eine Markierung des Nahbezugspunkts,
    4. eine Markierung für den Anpasspunkt, und
    5. eine Markierung für den Prismenbezugspunkt.

In dieser Stempelung können Fernbezugspunkt, Nahbezugspunkt und/oder Prismenbezugspunkt durch dicke Kreise markiert sein, damit um diese Punkte bei Messung mit einem Scheitelbrechwertmesser nur der richtige kreisrunde Bereich wirksam wird. Dadurch wirkt beim Nachmessen mit einem Scheitelbrechwertmesser genau die durch die Kreise definierte Apertur, was das Nachmessen erleichtert.

Diese Stempelung muss konsistent zu den Permanentmarkierungen angebracht werden, denn ein Optiker wird sich bei dem Einschleifen und Zentrieren des Brillenglases auf die Richtigkeit der Stempelung verlassen. Konsistent angebracht bedeutet dabei, dass die Markierungen der Stempelung in dem durch die Permanentmarkierungen wie oben erläutert definierten Koordinatensystem an der vom Brillenglashersteller festgelegten korrekten Position sein müssen. Eine hinsichtlich der Position ungenaue Anbringung der Stempelung könnte dann zu Lage- oder Orientierungsfehlern des Brillenglases führen, d. h. das Brillenglas wäre dann nicht korrekt in die Brillenfassung eingebaut, wenn sich der Optiker auf die korrekte Lage der Stempelung verlässt. Unter einem Zentrierfehler wird hier eine Verschiebung des Brillenglases (Änderung der seitlichen Lage und/oder Einschleifhöhe) gegenüber der korrekten Position verstanden, unter einem Orientierungsfehler eine Verdrehung gegenüber der korrekten Orientierung. Allerdings werden diese Bezeichnungen in Veröffentlichungen nicht einheitlich gebraucht, und manchmal wird der Begriff Zentrierfehler auch zusammenfassend für Zentrierfehler wie oben definiert und Orientierungsfehler benutzt. Erläuterungen hierzu finden sich auch im bereits oben zitierten "Handbuch der Augenoptik" Seite 140 ff.

Zentrierfehler und Orientierungsfehler können die Brauchbarkeit der fertigen Brille beeinträchtigen. Effekte, die von solchen Lagefehlern oder von Orientierungsfehlern hervorgerufen werden, sind vor allem bei Brillengläsern mit betragsmäßig größeren optischen Wirkungen kritisch, weil bei ihnen durch Zentrierfehler prismatische Effekte auftreten können, die unerwünscht sind. Die Größe prismatischer Effekte durch Zentrierfehler können mit der Prentice-Formel berechnet werden.

Bei Brillengläsern, die zur Korrektur eines größeren Astigmatismus bestimmt sind, wirkt ein Orientierungsfehler stärker als bei einem Brillenglas ohne oder mit geringem zu korrigierenden Astigmatismus. Bei Gleitsichtgläsern ist die Auswirkung eines Orientierungsfehlers bei größerer Addition auch stärker, als bei welchen mit kleiner Addition. Als Addition wird dabei der Nahzusatz eines Gleitsichtglases bezeichnet. Bei Gleitsichtgläsern kommt hinzu, dass durch eine horizontale nicht-gleichsinnige Dezentration beider Brillengläser (d. h. beide Brillengläser sind gegenüber einer korrekten Position verschieden verschoben) der sogenannte Progressionskanal bei der Benutzung nicht mehr beidäugig getroffen wird. Der Benutzer kann dann einen Gegenstand, der sich im Übergangsbereich zwischen Nah- und Fernzone befindet, nur mit einem Auge durch den zugehörigen Progressionskanal sehen, für das andere Auge benutzt er eine Stelle daneben, in der astigmatische und andere Bildfehler stören. Der Progressionskanal verläuft zwischen dem Fernbezugspunkt und dem Nahbezugspunkt und er ist so ausgelegt, dass man dort für die zusammengehörigen Blickrichtungen beider Augen optimale Sichtbedingungen erlebt. Auch vertikale nicht-gleichsinnige Dezentrationen (d.h. Verschiebungen) beeinträchtigen den Seheindruck für den Brillenträger: Die Brillengläser wirken nicht mehr so, wie sie berechnet worden sind. Vor allem wird der beidäugige Seheindruck durch Zentrierfehler gestört.

Daher wird eine hohe Genauigkeit beim Einschleifen und der Montage von Brillengläsern gefordert, welche sich teilweise aus Normen ergeben oder von Herstellern festgelegt sind. Beispielsweise sind in der DIN EN ISO 8980-2 im Punkt 5.2.4 maximale Abweichungen für die Zentrierung vorgegeben. Als Zentriergenauigkeit kann typischerweise ein Bereich von $\pm$ 0,5 Millimetern in horizontaler und vertikaler Richtung gefordert werden. Für Einstärkengläser ist ein tolerierbarer Winkelfehler abhängig von der zylindrischen Wirkung (Zylinder gemäß DIN EN ISO 13666: 2012) des Brillenglases. Der maximale erlaubte Fehler bei der Zentrierung ist nach der DIN EN ISO 8980-2 von der Stärke der optischen Wirkung des Brillenglases abhängig, insbesondere von der Brechkraft in dem stärker brechenden Hauptschnitt. Bei Gleitsichtgläsern ist - auch bei kleinem Rezept-Zylinder, d.h. kleinem im Rezept verordnetem Zylinderkeineswegs ein Orientierungsfehler nahe der Grenzen der genannten Norm zulässig. Der beste Seheindruck entsteht für den Benutzer dann, wenn kein Zentrier- und kein Orientierungsfehler vorhanden sind: Der Optiker sollte deshalb so genau arbeiten, wie er kann.

Für die Anbringung der Stempelung wird die Genauigkeit üblicherweise unabhängig von der Wirkung gefordert. Es wird hier eine Genauigkeit von ± 0,3 Millimeter bei der Zentrierung (d. h. Position in horizontaler und vertikaler Richtung) und von ± 1 Grad bei der Orientierung (d. h. Rotation um eine Achse, die im Wesentlichen senkrecht auf dem Brillenglas steht, im Folgenden auch als z-Richtung bezeichnet).

Flächen, die für die Gleitsichtwirkung eines Gleitsichtbrillenglases verantwortlich sind (auch als Gleitsichtflächen bezeichnet), sind heutzutage üblicherweise auf der Brillenglasrückseite angebracht. Man nennt diese Brillengläser deshalb auch "rückseitenprogressiv" (engl: BSP= back side progressive) Die Brillenglasrückseite ist dabei die dem Auge zugewandte Seite des Brillenglases. Die Permanentmarkierungen werden bei Gleitsichtgläsern üblicherweise auf derjenigen Brillenglasseite aufgebracht, die die Gleitsichtwirkung bewirkt, heutzutage deshalb also meistens auf der Brillenglasrückseite. Bei der Herstellung der Gleitsichtfläche ist das Brillenglas nämlich geblockt, d. h. auf einer Halterung angebracht, und das Blockstück definiert präzise das Koordinatensystem auf dem Brillenglas und auf der Gleitsichtfläche. Das Blockstück mit üblicherweise 43 Millimeter Durchmesser befindet sich dabei auf der Seite des Brillenglases, die nicht bearbeitet wird: heutzutage meistens also auf der Brillenglasvorderseite. Im geblockten Zustand des Brillenglases ist es deswegen einfach, die Permanentmarkierungen an den korrekten Stellen (z.B. ± 17 Millimeter zum ERP) anzubringen, da das Koordinatensystem im geblockten Zustand genau definiert und mechanisch verkörpert ist. Bei BSP-Gläsern verdeckt das Blockstück wegen seiner Größe allerdings die Stellen für die Permanentmarkierung, wenn man sie auf der Brillenglasvorderseite anbringen wollte. Man bringt sie deshalb an den Stellen an, an denen ein parallel zur Normalenrichtung im ERP auf der Brillenglasvorderseite an den vorgeschriebenen Stellen einfallender Strahl das Brillenglas wieder verlassen würde. In der richtigen Pose bewirkt das später die richtige "scheinbare Lage" der Permanentmarkierungen. Diese Lage gewährleistet, dass die Permanentmarkierungen aus der richtigen Richtung betrachtet, genau an den vorgeschrieben Stellen auf der Brillenglasvorderseite erscheinen.

Die Brillenglasrückseite weist üblicherweise eine konkave und die Brillenglasvorderseite eine konvexe Form auf. Die Permanentmarkierungen werden bei den meisten Gleitsichtbrillengläsern also auf der konkaven Seite des Brillenglases angebracht.

Bei den früher üblichen Brillengläsern, die im "Halbfabrikateverfahren" hergestellt wurden, bewirkte die Brillenglasvorderseite die Gleitsichtfunktion. Diese Gläser nennt man deshalb auch "vorderflächenprogressiv" (engl: FSP=front side progressive). Deshalb lagen die Permanentmarkierungen bei Gleitsichtbrillengläsern früher immer auf der Brillenglasvorderseite. Daher lautet die Vorschrift für den Optiker in einem Fall, in dem die Permanentmarkierungen auf der konkaven Brillenglasseite angebracht sind, dass die Brillengläser auf der konvexen Brillenglasvorderseite dort anzupunkten (d. h. zu markieren) sind, wo die Permanentmarkierungen auf der Brillenglasvorderseite erscheinen, wenn man das Brillenglas aus dem Unendlichen senkrecht zur Vorderfläche im Glasmittelpunkt betrachtet. (Der Glasmittelpunkt ist dabei der Punkt in der Mitte zwischen beiden Permanentmarkierungen, also dem ERP. Statt einer Betrachtung aus dem Unendlichen reicht es in der Praxis aus, mindestens 400 Millimeter Betrachtungsabstand einzuhalten). FSP-Brillengläser kann man hingegen auf der Vorderseite direkt auf den Markierungen anpunkten.

Beim Anbringen der Stempelung in einer automatisierten Vorrichtung wird das Brillenglas auf der konkaven Seite, im Falle von Gleitsichtgläsern also an der Brillenglasrückseite, zum Beispiel mit einem Saughalter angesaugt. Die laterale Lage des Haltepunkts, also des Schnittpunkts der Saughalterachse mit der Brillenglasrückfläche, und die Orientierung des Brillenglases sind dabei unbekannt. Die Position und Orientierung des so angesaugten Brillenglases ergibt sich durch das komplizierte Wechselspiel zwischen Saughalter und Brillenglas. Sie hängt vom Haltepunkt ab. Eine Vorrichtung, mit welcher eine Stempelung angebracht wird und welche einen Saughalter benutzt, wird unter der Bezeichnung "X-Cube" von dem Unternehmen TechOptics vertrieben, siehe www.techofrance.com/x-cube.html.

Bei einem genau in der Mitte gehaltenen Brillenglas stimmt die Richtung des Saughalters noch recht gut mit der Normalenrichtung der angesaugten konkaven Brillenglasrückseite im Mittelpunkt des Saughalters überein. Wenn das Brillenglas dezentriert gehalten wird, bewirkt das Gewicht des Brillenglases Momente auf den Saughalter, der dadurch etwas nachgibt. Daher kann das Brillenglas dann verkippt auf dem Saughalter sitzen.

In den meisten Fällen ist die Brillenglasrückseite nicht sphärisch. Wenn sie torisch ist, ist die Orientierung des angesaugten Brillenglases schon stärker unbestimmt. Aus Symmetrieüberlegungen ist herleitbar, dass die Richtung des Saughalters bei Ansaugung einer torischen Fläche immer noch annähernd in Normalenrichtung im Mittelpunkt des Saughalters liegt. Abweichungen davon kommen wieder durch Momente, die durch die Schwerkraft, insbesondere durch das Gewicht des Brillenglases, bewirkt werden. Anders als bei der Ansaugung einer sphärischen Fläche gibt der Saughalter aber auf Momente im meridionalen Schnitt und im Rotationsschnitt verschieden stark nach.

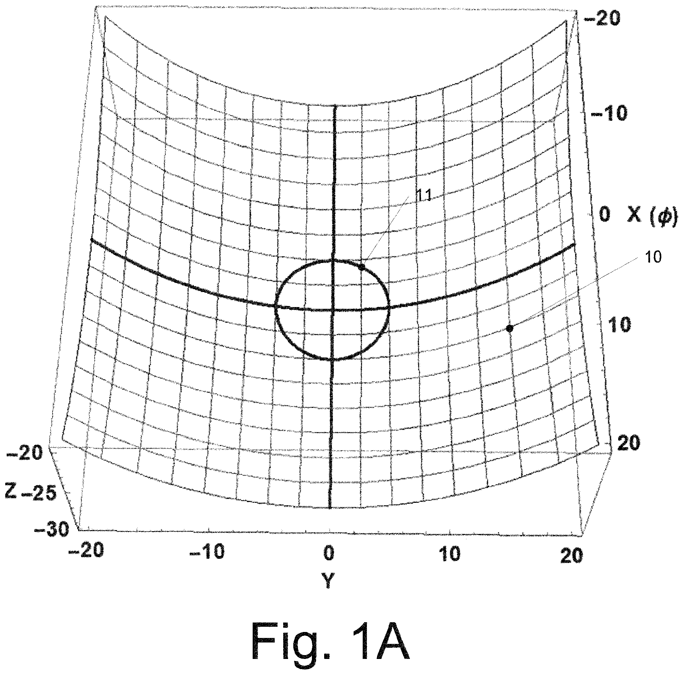

Die Schnittfigur einer zylindrischen Fläche mit Zylinderachse parallel zur Richtung des Saughalters ist bei einer torischen Fläche und senkrechter Ausrichtung des Saugers auf ihr nämlich eine annähernd sinusoidale Kurve in z-Richtung. Dies wird kurz unter Bezugnahme auf die Figuren 1A bis 1F erläutert.

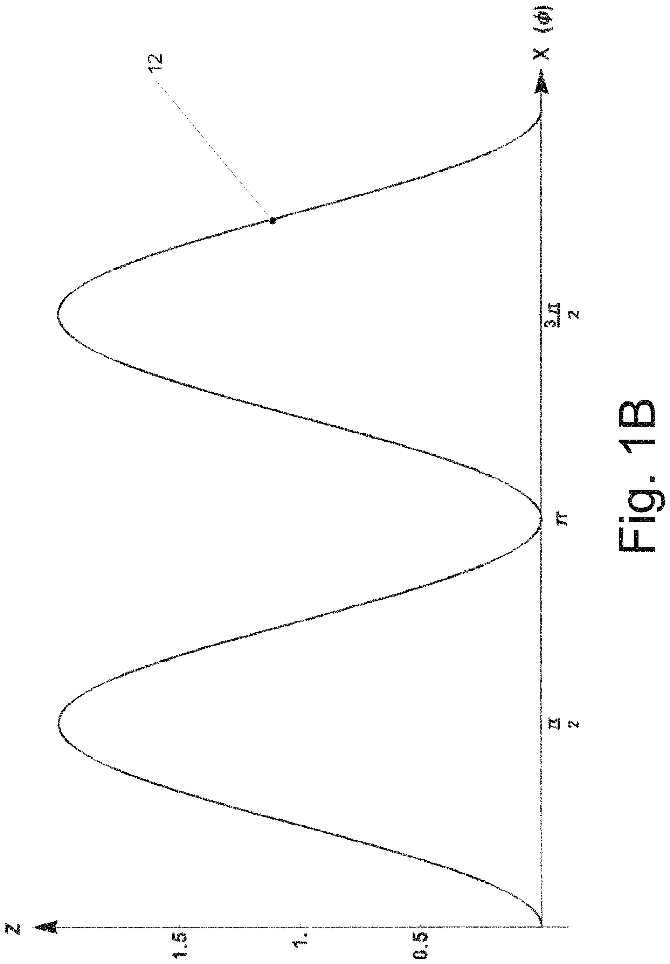

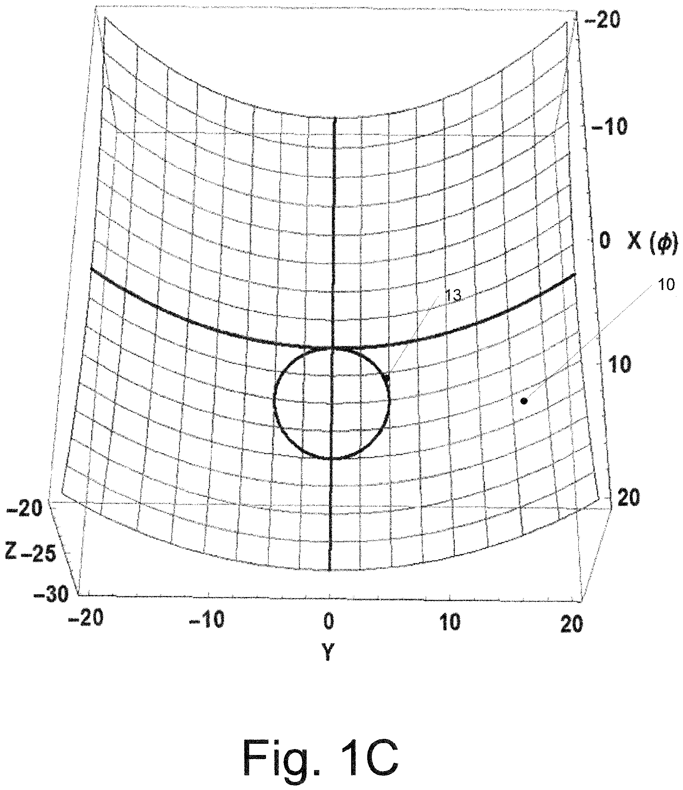

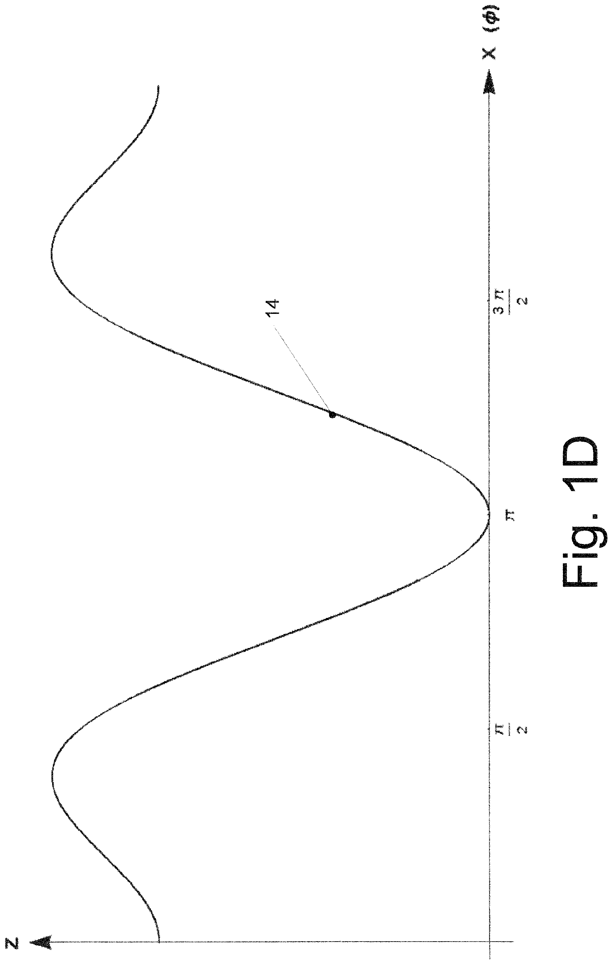

Die Fig. 1A zeigt eine Darstellung einer torischen Fläche 10 als Beispiel für eine konkave Brillenglasrückseite. Das Bezugzeichen 11 zeigt den Schnitt eines Zylinders mit der torischen Fläche. Der Zylinder repräsentiert den Saughalter. Im Falle der Fig. 1A ist die torische Fläche senkrecht zu dem Zylinder ausgerichtet, der den Saughalter repräsentiert. Entlang des Schnitts 11 ergibt sich eine Höhe in z-Richtung wie in Fig. 1B als Kurve 12 dargestellt. In Fig. 1C ist eine nicht senkrechte Ausrichtung des Zylinders auf der Fläche 10 gezeigt, was eine Schnittlinie 13 ergibt. In der Fig. 1D zeigt eine Kurve 14 die Höhe entlang dieser Schnittlinie 13.

Verglichen mit der Kurve 12 ist die Kurve 14 deutlich nicht sinusoidal, d. h. sie weicht deutlich von einer Sinusform ab.

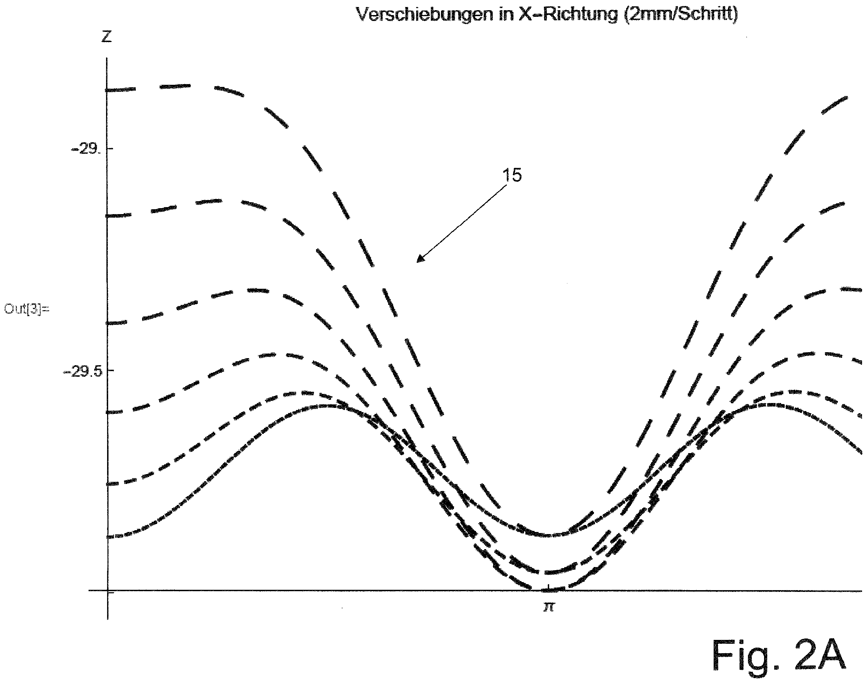

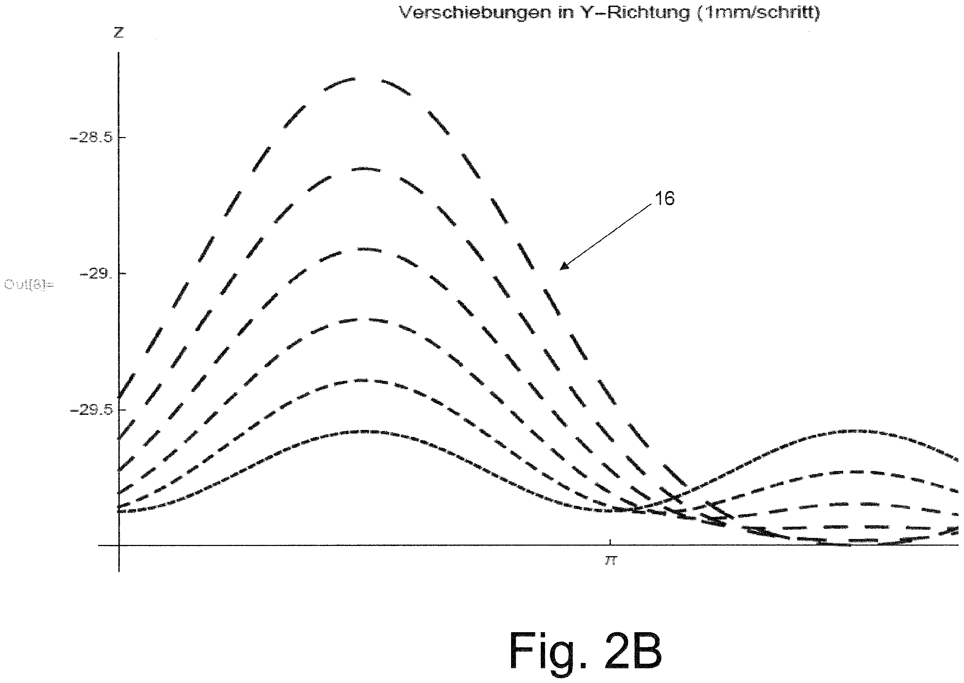

Dieser Effekt, d.h. die Variation von Höhen entlang von Schnittkurven ist, in den Figuren 2A und 2B nochmals dargestellt. In Fig. 2A ist eine Kurvenschar 15 dargestellt, wobei die einzelnen Kurven der Kurvenschar 15 das Höhenprofil in z-Richtung entlang einer Schnittlinie (z.B. 12 oder 13) zeigen, welche von Linie zu Linie um 2 Millimeter in x-Richtung auf der Fläche 10 verschoben wird. Ähnlich zeigt in Fig. 2B eine Kurvenschar 16 das Höhenprofil bei einer Verschiebung in y-Richtung in Schritten von 1 Millimeter (die x- und y-Richtungen sind in der Fig. 1A und 1C angegeben). Durch die Elastizität des verwendeten Saughalters gleichen sich die Berge und Täler der gezeigten Kurven beim Ansaugen gegenseitig aus Schließlich stellt sich eine annähernd senkrechte Ansaugrichtung wie in den Figuren 1A und 1B ein.

Bei einer Freiformfläche, wie beispielsweise einer Gleitsichtfläche auf der Brillenglasrückseite eines Gleitsichtglases, sind die Verhältnisse komplizierter. In diesem Fall ist die Schnittkurve eines Zylinders mit der Freiformfläche zwar gegebenenfalls eine noch ähnliche Figur wie in den Figuren 1A bis 1D sowie 2A und 2B für torische Flächen dargestellt, aber nicht mehr genau eine derartige Figur. Die Breite der "Berge" und "Täler" in z-Richtung entlang von Schnittlinien ist nicht mehr gleich. Deshalb stellt sich bei einer Gleitsichtfläche eine Ansaugrichtung ein, die schwerer vorhersagbar ist und die nicht nur von der Form der Gleitsichtfläche, sondern auch stark von mechanischen Eigenschaften des Saughalters abhängt. Daher ist die genaue räumliche Lage des Brillenglases auf dem Saughalter nicht einfach vorhersagbar.

Wenn die Permanentmarkierungen, wie oben erläutert, auf der Brillenglasrückseite angebracht sind, erscheinen sie auf der Brillenglasvorderseite, auf die die Stempelung angebracht werden soll, an einer Stelle, die von der Lichtbrechung durch das Brillenglas abhängt. Je nach Orientierung kann diese Position variieren. Dies erschwert eine genaue Positionierung der Stempelung oder macht sie unmöglich, wenn man die Pose des Glases bei der Messung unberücksichtigt lässt.

Die EP 1 646 855 B1 und die EP 2 597 451 A2 offenbaren jeweils ein Verfahren sowie eine Beleuchtungsanordnung, mit welcher Permanentmarkierungen sichtbar gemacht werden können und mit eine Kamera erfasst werden können. Aufgrund des oben beschriebenen Effektes der Lichtbrechung unterscheidet sich aber die so erfasste Lage der Permanentmarkierungen von der tatsächlichen Lage der Permanentmarkierungen und hängt insbesondere von der Orientierung des Brillenglases auf dem Halter ab. Die Lage der Permanentmarkierungen im Kamerabild, die mit einer solchen Vorrichtung primär bestimmt wird, wird im Rahmen dieser Anmeldung auch als "scheinbare Lage" bezeichnet.

Die DE 103 00 777 A1 beschreibt eine Zentrierung eines Brillenglases auf Basis von Permanentmarkierungen, dort als Gravurzeichen bezeichnet. Auch hier kann es aufgrund des Effektes der Lichtbrechung dazu kommen, dass eine scheinbare Lage der Gravurzeichen erfasst wird, die von einer tatsächlichen Lage abweicht.

Die DE 10 2007 037 730 A1, von der die vorliegende Erfindung ausgeht, löst dieses Problem, indem Markierungen sowohl auf der Brillenglasvorderseite als auch auf der Brillenglasrückseite angebracht werden. Mit Kenntnis der dreidimensionalen Lagebeziehung kann dann das Brillenglas korrekt positioniert werden.

Nachteilig ist dabei, dass hierfür Markierungen sowohl auf der Brillenglasvorderseite als auch auf der Brillenglasrückseite angebracht werden müssen, was bei genauen Positionserfordernissen aufwändig sein kann, und die Herangehensweise der DE 10 2007 037 730 A1 nur bei derart speziell mit Markierungen versehenen Brillengläsern, jedoch nicht bei herkömmlichen nur wie oben beschrieben mit Permanentmarkierungen versehenen Brillengläsern anwendbar ist.

Es ist daher eine allgemeine Aufgabe der vorliegenden Erfindung, Verfahren und Vorrichtungen zur Bestimmung von Position und/oder Orientierung eines Brillenglases auf einem Halter, beispielsweise einem Saughalter wie oben beschrieben, bereitzustellen, welche auch auf Brillengläser, die nur in herkömmlicher Weise mit Permanentmarkierungen versehen sind, anwendbar sind. Weitergehend ist es eine Aufgabe, eine Stempelung in korrekter Position an einem Brillenglas anzubringen, auf wenn das Brillenglas verkippt oder verdreht auf einem Halter liegt.

Die US 2014/352885 A1 offenbart ein Verfahren gemäß dem Oberbegriff der Ansprüche 1 und 11. Auch die US 2007/091262 A1 offenbart ein Verfahren, mit welchem Position oder Orientierung eines Brillenglases mithilfe von einer Lage von Permanentmarkierungen bestimmt wird, wobei dies dazu dient, einen Ansaugpunkt zu bestimmen.

Auch die DE 10 2014 005 281 A1 beschreibt eine Vorrichtung und ein Verfahren zur berührungslosen Detektion einer Position von zumindest einem mit Markierungen versehenem Brillenglas im dreidimensionalen Raum gemäß dem Oberbegriff der Ansprüche 1 und 11. Gemäß der Lehre der DE 10 2014 005 281 A1 wird das Brillenglas beleuchtet und von zwei räumlich verschieden angeordneten Kameras aufgenommen. Die reale Lage der Markierungen werden bestimmt, wobei die Markierungen in Transmission durch das Brillenglas hindurch beleuchtet werden können, die Markierungen des Brillenglases aber immer der Kamera zugewandt sind. In einem Verrechnungsschritt wird aus den verschiedenen Kameraaufnahmen dann die Position des Brillenglases bestimmt.

Die DE 10 2013 219 838 A1 beschreibt das Zusammenwirken von drei Messstationen zur Vermessung eines Gegenstandes, beispielsweise eines Brillenglases mit einer ersten optisch aktiven Fläche und einer zweiten optisch aktiven Fläche, wobei das Brillenglas eine Markierung aufweisen kann. Die DE 10 2013 219 838 A1 offenbart Merkmale gemäß dem Oberbegriff der Ansprüche 14 und 79, 33 und 87, 41 und 90 sowie 50 und 94. In der ersten Messeinrichtung wird die Lage von drei Punkten auf erster und zweiter optisch aktiver Fläche bezüglich einem ortsfesten Koordinatensystem mittels taktiler Messtaster bestimmt. In der zweiten Messstation wird mittels einer Kameraaufnahme die reale Lage der Markierung erfasst. Hierzu muss die Markierung auf der Kamerazugewandten Seite angeordnet sein. Eine alternative Ausführungsform offenbart eine obere und eine untere Vorrichtung, so dass Markierungen eines Brillenglases auf beiden Seiten erfasst werden können, wobei die jeweilige Vorrichtung die reale Lage der Markierung auf der jeweils sensorzugewandten Seite erfasst. In einer dritten Messstation wird die Topographie von erster und zweiter optisch wirksamer Fläche erfasst.

Für die Lehren von sowohl DE 10 2014 005 281 A1 als auch DE 10 2013 219 838 A1 ist es notwendig, dass die Kameraeinrichtungen, die Bilder der Markierungen aufnehmen, die reale Position der Markierungen beobachten, also das keine Brechung des von der Markierung ausgehenden Lichts bis zur ersten optisch wirksamen Fläche der Kamera, beispielsweise des Kameraobjektivs, erfolgt. Die Brillengläser müssen also jeweils so orientiert sein, dass die Seite mit den Permanentmarkierungen zur Beobachtungsseite hin ausgerichtet ist. Dies kann - ähnlich wie bei den oben beschriebenen Verfahren der EP 1 646 855 B1 und der EP 2 597 451 A2 - nachteilig sein, weil es die Freiheiten bei der Anordnung der Linse beschränkt und Möglichkeiten der Halterung von Brillengläsern beschränkt. Dies kann insbesondere bei den zuvor genannten Rückseitenprogressiven Gleitsichtbrillengläsern problematisch sein, da diese häufig Permanentmarkierungen ausschließlich auf der Rückseite aufweisen. Die Einschränkungen führen dazu, dass beispielsweise opake Materialien für die Halterung nicht zum Einsatz kommen können, was insbesondere bei Saugnapfhalterungen nachteilig für die Materialeigenschaften sein kann.

Unter einem opaken Material wird hierbei ein Material verstanden, welches im verwendeten Wellenlängenbereich des Lichts lichtundurchlässig ist, beispielsweise weil es das betreffende Licht stark absorbiert und/oder reflektiert.

Im Folgenden wird zunächst ein erfindungsgemäßes Verfahren vorgestellt. Entsprechende Vorrichtungen werden ebenfalls bereitgestellt. Details und Erklärungen werden anschließend davon dargestellt.

Abermals ausgehend von der DE 10 2013 219 838 A1 ist es eine Aufgabe der Erfindung, das Verfahren der DE 10 2013 219 838 A1 schneller durchführen zu können und eine höhere Genauigkeit des Verfahrens erzielen zu können. Dies wird gemäß erfindungsgemäß von einem Verfahren gemäß Anspruch 1 und einer Vorrichtung gemäß dem Anspruch 10 gelöst. Die Unteransprüche definieren weitere Ausführungsformen sowie ein Computerprogramm zur Durchführung des Verfahrens mithilfe einer Recheneinrichtung.

Erfindungsgemäß wird ein Verfahren zur Bestimmung von Position und/oder Orientierung eines Permanentmarkierungen aufweisenden Brillenglases auf einem Halter bereitgestellt, umfassend:

Bereitstellen von erfassten scheinbaren Lagen der Permanentmarkierungen auf dem Brillenglas, Bestimmen von Position und/oder Orientierung des Brillenglases auf Basis der erfassten scheinbaren Lage der Permanentmarkierungen und einer markierungsunabhängigen Zusatzinformation.

Das Verfahren umfasst weiterhin ein Bereitstellen einer erfassten scheinbaren Lage der Permanentmarkierungen auf dem Brillenglas und Bestimmen der Position und/oder der Orientierung des Brillenglases auf Basis der scheinbaren Lage der Permanentmarkierungen und einer markierungsunabhängigen Zusatzinformation.

Das Verfahren ist dadurch gekennzeichnet, dass das Bestimmen von Position und/oder Orientierung des Brillenglases eine iterative Berechnung von Position und/oder Orientierung des Brillenglases umfasst, die iterative Berechnung auf Basis einer Haltecharakteristik und der erfassten scheinbaren Lage der Permanentmarkierungen durchgeführt wird und ferner auf Basis von mindestens einem erfassten Reflex erfolgt. Die Haltecharakteristik und der mindestens eine Reflex stellen dabei markierungsunabhängige Zusatzinformationen dar. Die die iterative Berechnung umfasst in jeweiligen Iterationsschritten einen Vergleich zwischen einer erwarteten Lage des Brillenglases und einer erfassten scheinbaren Lage der Permanentmarkierungen und Lage des mindestens einen Reflexes.

Ein Vorteil gegenüber der DE 10 2013 219 838 A1 besteht darin, dass das Verfahren durch die iterative Vorgehensweise schneller durchgeführt werden kann und zugleich eine höhere Genauigkeit des Ergebnisses liefert.

Im Weiteren werden nun die einzelnen Merkmale der Erfindung näher erläutert und definiert.

Die scheinbare Lage von Permanentmarkierungen ist, wie oben dargelegt, die Lage, die durch Beobachtung des Brillenglases mittels einer Kameraeinrichtung ermittelt wird, wenn die Permanentmarkierungen auf einer Brillenglasrückseite angebracht sind und die Beobachtung von der Brillenglasvorderseite aus erfolgt.

Das Erfassen der scheinbaren Lage kann beispielsweise so wie in der EP 1 646 855 B1 oder der EP 2 597 451 A2 beschrieben erfolgt sein. Bereitstellen umfasst den Fall, dass das Erfassen der scheinbaren Lage der Permanentgravuren an einem anderen Ort als die Bestimmung der Position und/oder Orientierung erfolgen kann und dass das Erfassen auch von einer anderen Person initiiert worden sein kann wie die Durchführung des computerimplementierten Verfahrens. Beispielsweise können Berechnungen des Verfahrens im Rahmen dieser Anmeldung auf einem entfernten Rechner durchgeführt werden, mit dem über ein Netzwerk kommuniziert wird.

Unter einer markierungsunabhängigen Zusatzinformation ist dabei eine Information unabhängig von der erfassten scheinbaren Lage der Permanentmarkierungen und auch unabhängig von sonstigen Markierungen sowie Eigenschaften dieser Markierungen, wie beispielsweise relative Lage von Markierungen, zu verstehen, aus der Lage und/oder Position ableitbar sind. Eine solche markierungsunabhängige Zusatzinformation benötigt also keine spezielle Lage von Markierungen wie Permanentmarkierungen auf dem Brillenglas. Eine solche markierungsunabhängige Zusatzinformation kann beispielsweise auf Messungen oder auch auf Berechnungen auf Basis von Eigenschaften des Halters und des Brillenglases beruhen. Diese Messungen und/oder ggf. Rechnungen können wiederum an einem anderen Ort und von einer anderen Person initiiert worden sein, wie die Durchführung des erfindungsgemäßen Verfahrens.

Auf diese Weise können für sich genommen bekannte Techniken zum Erfassen der scheinbaren Lage der Permanentmarkierungen unter Benutzung der markierungsunabhängigen Zusatzinformation dahingehend erweitert werden, um Position und/oder Lage des Brillenglases zu bestimmen. Indem eine markierungsunabhängige Zusatzinformation verwendet wird, ist keine spezielle Markierung des Brillenglases erforderlich, und das Verfahren ist auf Brillengläser mit herkömmlichen Permanentmarkierungen anwendbar.

Position und/oder Orientierung können mit Hilfe von Koordinatensystemen angegeben werden, die nun erläutert werden. Diese Koordinatensysteme werden auch für spätere Erläuterungen in dieser Anmeldung verwendet. Zu einem Brillenglas gehört ein Koordinatensystem (im Folgenden auch als Brillenglaskoordinatensystem bezeichnet), in dem man alle Angaben über das Brillenglas macht. Den Ursprung (=Nullpunkt) dieses Brillenglaskoordinatensystems bildet der Punkt, der genau mitten zwischen den beiden (scheinbaren) Lagen der Permanentmarkierungen liegt. Dieser Punkt wird auch als ERP = engraving reference point genannt. Wenn die Permanentmarkierungen tatsächlich auf der konvexen Fläche angebracht sind (was aus den oben beschriebenen Gründen heute eher selten ist und eigentlich nur noch bei FSP-Gläsern vorkommt), ist der Nullpunkt der tatsächliche Mittelpunkt der kürzesten Verbindungskurve auf der Vorderfläche (=konvexen Fläche) zwischen den beiden Markierungen. Bei Brillengläsern, bei denen die Markierungen auf der Brillenglasrückseite (=konkave Fläche) angebracht sind, spielen die scheinbaren Punkte auf der Brillenglasvorderseite bei Betrachtung aus der richtigen Richtung diese Rolle in der Definition des Koordinatensystems. Die XY-Ebene des Brillenglaskoordinatensystems ist die Tangentialebene an das Brillenglas im ERP. Die Z-Richtung des Brillenglaskoordinatensystems entspricht der oben erläuterten vorgeschriebenen Betrachtungsrichtung für Gläser mit Permanentmarkierungen auf der Brillenglasrückseite und ist die Senkrechte zur XY-Ebene. Wenn man die (scheinbaren) Lagen der Permanentmarkierungen in die XY-Ebene projiziert, bestimmt deren Verbindungslinie die X-Richtung des Brillenglaskoordinatensystems. Die Permanentmarkierungen sind durch Zusatzangaben nahe bei diesen voneinander unterscheidbar. Man erkennt eine als "linke" und die andere als "rechte" Permanentmarkierung. Der Richtungssinn von der linken zur rechten projizierten (scheinbaren) Permanentmarkierung bestimmt den Zählsinn der X-Achse. Die Y-Achse liegt in der XY-Ebene = Tangentialebene an die Brillenglasvorderfläche im ERP senkrecht zu dieser X-Achse, und zwar bei einer Drehung um 90° gegen den Uhrzeigersinn von vorne aus gesehen. Den Zählsinn der Z-Achse legt man zweckmäßig so fest, dass X, Y und Z-Achse ein Rechtshandsystem ergeben. Die Position des Brillenglases bezieht sich auf das "Weltkoordinatensystem" der Vorrichtung, d.h. sie bezieht sich auf ein externes, fest vorgegebenes Koordinatensystem. Die Orientierung umfasst insbesondere den Drehwinkel um die Z-Achse des Weltkoordinatensystems, die notwendig ist, die Richtung der X-Achse des Brillenglases in die X-Achse des Weltkoordinatensystems zu überführen.

Durch den Halter wird vor allem auch die Höhe des Brillenglases im Gerät festgelegt, die bei den Bilderkennungsvorgängen eine Rolle spielt. Wenn man sich den hohen Aufwand eines telezentrischen Objektivs spart, hat der Abstand des zu vermessenden Brillenglases zur Kamera etwas Einfluss auf die Größe des Bildes. Durch richtige Auslegung und erforderlichenfalls Höhenverschiebung des Saughalters sorgt man dafür, dass das Brillenglas bei der Messung annähernd in der richtigen Höhe gehalten wird. Durch die Definition des zu bestimmenden Koordinatenursprungs im ERP ist das erfindungsgemäße Verfahren unempfindlich gegenüber kleinen Fehlpositionierungen in der Höhe im Gerät, weil das Verfahren die vom Brillenglas selbst bekannten Eigenschaften berücksichtigen kann. Eine einfache Koordinatenbestimmung hingegen, die die laterale Position lediglich aus der Abweichung des Mittelwerts der im Kamerabild gemessenen Koordinaten beider Permanentmarkierungen z.B. von dessen Soll-Lage im Kamerabild ermittelt, liefert fehlerhafte Ergebnisse, die das erfindungsgemäße Verfahren vermeidet.

Bevorzugt umfasst das Verfahren des Weiteren:

Erfassen der scheinbaren Lagen der Permanentmarkierungen,
Exzentrisches Beleuchten des Brillenglases,
Erfassen einer Lage mindestens eines durch das exzentrische Beleuchten hervorgerufenen Reflexes auf dem Brillenglas,
wobei die markierungsunabhängige Zusatzinformation die Lage des mindestens einen Reflexes umfasst.

Unter einem exzentrischen Beleuchten des Brillenglases versteht man ein Beleuchten durch eine zusätzliche Lichtquelle, welche nicht auf der optischen Achse liegt, über die die Lage der Permanentmarkierungen und dann auch des Reflexes erfasst wird, insbesondere einer optischen Achse einer zum Erfassen der scheinbaren Lage der Permanentmarkierungen verwendeten Kameraeinrichtung. Die optische Achse bezeichnet dabei allgemein eine imaginäre Linie, die die Ausbreitung von Licht durch ein optisches System definiert. Bei rotationssymmetrischen optischen Systemen fällt die optische Achse mit der Symmetrieachse zusammen. Für ein System aus Linsen und Spiegeln, wie es in Kameraeinrichtungen zum Einsatz kommt, verläuft die optische Achse durch die Krümmungsmittelpunkte der Linsen und Spiegel. Siehe hierzu auch den Wikipedia-Artikel "Optical Axis" in der englischsprachigen Wikipedia, Stand 14.07.2017.

Auf diese Weise kann die markierungsunabhängige Zusatzinformation mit vergleichsweise einfachen Mitteln durch eine einfache Erfassung eines Reflexes gewonnen werden. Wenn man z.B. ein BSP-Brillenglas auf dem Saughalter in verschiedenen Stellungen seitlich verschoben anbringt, dann bewirkt das neben der Translation, die sich im Wesentlichen als Translation bei der Erfassung der Lage der Permanentmarkierungen äußert, auch noch eine Verkippung des Brillenglases. Die Verkippung hat auch einen - im Allgemeinen aber kleinen - zusätzlichen Einfluss auf die scheinbare Lage der Permanentmarkierungen. Die Verkippung bewirkt vor allem eine deutliche Änderung der erfassten Lage des mindestens einen Reflexes. Die erfassten Lagen von Permanentmarkierungen und des mindestens einen Reflexes "laufen" also unterschiedlich bei Verkippung und dies gibt eine markierungsunabhängige Zusatzinformation über Pose des gesamten Brillenglases.

Für das Erfassen der Lage des mindestens einen Reflexes kann die gleiche Kamera, wie für das Erfassen der Lage von Permanentmarkierungen nach der oben erwähnten EP 1 646 855 B1 oder der EP 2 597 451 A2, verwendet werden. Bei dieser Druckschriften wird, wie erwähnt, das Brillenglas zum Erfassen der scheinbaren Lage der Permanentmarkierungen koaxial zu der Kamera beleuchtet, indem das Licht einer Lichtquelle durch einen Strahlteiler auf die optische Achse der Kamera gespiegelt wird. Diese Art der Beleuchtung wird auch als koaxiale Auflichtbeleuchtung bezeichnet. Das durch das Brillenglas hindurchtretende Licht der in dieser Druckschrift verwendeten koaxialen Auflichtbeleuchtung fällt bei der Anordnung der EP 1 646 855 B1 weiter auf einen Retroreflektor und läuft von dort nahezu in sich selbst zur Kamera zurück. Das durch das Brillenglas hindurchtretende Licht der exzentrischen Beleuchtung, welche dann durch eine zusätzliche Lichtquelle erfolgt, läuft auch nach Reflektion am Retroreflektor (wenn es diesen überhaupt trifft) in sich zurück, wegen der Exzentrizität der zusätzlichen Lichtquelle gelangt es auf diesem Weg aber nicht zur Kamera. Das tun allenfalls die Reflexe an beiden Brillenglasflächen. Ob und wo solche Reflexe auftreten, hängt von den Krümmungen der Brillenglasflächen und von der Pose des Glases bei der Messung ab. Bei der EP 2 597 451 A2 wird statt des Retroreflektors ein rotierender Keil verwendet.

Auf diese Weise kann, verglichen mit dem Aufbau der EP 1 646 855 B1 oder der EP 2 597 451 A2, mit einer einfachen Erweiterung, nämlich dem Bereitstellen einer oder mehrerer zusätzlicher Lichtquellen zu der exzentrischen Beleuchtung, eine Position und/oder Orientierung des Brillenglases bestimmt werden.

Die Position und/oder Orientierung kann dann auf Basis vergleichsweise einfacher optischer Überlegungen bestimmt werden, welche die Lichtbrechung durch das Brillenglas berücksichtigen.

In manchen Ausführungsbeispielen, aber nicht darauf beschränkt, kann sich die scheinbare Lage der Permanentmarkierungen von der realen Lage der Permanentmarkierungen aufgrund von Lichtbrechung durch das Brillenglas unterscheiden.

Dies hat den Vorteil, dass ein Bestimmen der scheinbaren Lage der Permanentmarkierungen - im Gegensatz zu einem Bestimmen der realen Lage- auch Informationen zu den Brechungseigenschaften des Brillenglases liefern kann. Zusätzlich kann es so möglich sein, ein Brillenglas von einer anderen Seite als die Seite, auf der die Permanentmarkierungen aufgebracht sind zu vermessen. Dies liefert mehr Gestaltungsmöglichkeiten für die Halter.

In manchen Ausführungsbeispielen kann der Halter aus einem opaken Material sein.

In manchen Ausführungsbeispielen kann der Halter ein Saughalter sein.

Dies hat den Vorteil, dass ein schnelles und schonendes Lagern und austauschen des Brillenglases ermöglicht werden kann, so dass die Zeit die für das Durchführen des Verfahrens benötigt wird gegenüber anderen Halterungsarten reduziert werden kann.

Dies kann auch den Vorteil haben, dass eine größere Anzahl von Materialien für den Bau des Halters zur Verfügung steht, sodass die gewünschten Eigenschaften, beispielsweise die mechanischen Eigenschaften des Halters verbessert werden können.

Bevorzugt erfolgt das exzentrische Beleuchten des Brillenglases mittels mehrerer Lichtquellen, was zu mehreren Reflexen (oder auch mehren Reflex-Paaren bei Reflexen von der Brillenglasvorderseite und der Brillenglasrückseite) führt. Durch das Verwenden mehrerer Lichtquellen kann die Genauigkeit der Bestimmung erhöht werden.

Um den Bereich messbarer Brillengläser (gekennzeichnet durch die Krümmungen der Brillenglasvorderseite und der Brillenglasrückseite) zu erweitern und um die Genauigkeit der Bestimmung von Position und/oder Orientierung weiter zu erhöhen, können die mehreren Lichtquellen verschiedene Abstände von der optischen Achse der Kameraeinrichtung aufweisen. Die Krümmungen sind wie in der Differentialgeometrie als Kehrwerte der Hauptkrümmungsradien definiert, siehe z.B. Bronstein-Semendjajew, Taschenbuch der Mathematik, 25. Auflage 1991, Kapitel 4.3, Das exzentrische Beleuchten erfolgt hier also durch mehrere Lichtquellen, die zu mehreren Reflexen insbesondere an der Brillenglasvorderseite führen, deren Lage erfasst wird, indem man sie in einem aufgenommenen Bild misst.

Die mehreren Lichtquellen können dabei abwechselnd, z.B. einzeln oder in Gruppen nacheinander, aktiviert werden und die entsprechenden Reflexe können nacheinander erfasst werden. Auf diese Weise kann jeder Reflex der jeweiligen Lichtquelle zugeordnet werden, was die Berechnung erleichtert, da es Fehler durch eine falsche Zuordnung von Reflexen ausschließt. Die Lage der mehreren Lichtquellen sind ebenso wie die Lage der Kameraeinrichtung im Weltkoordinatensystem bekannt, und fließen in die Berechnungen zur Bestimmung von Position und/oder Orientierung ein.

Eine abwechselnde Aktivierung in Gruppen kann bei geeigneter Wahl der Gruppen dazu führen, dass das Erfassen der Lage des mindestens einen Reflexes (hier von mehreren Reflexen) weniger oft durchgeführt werden muss, als Lichtquellen vorhanden sind, um jeden Reflex eindeutig der jeweiligen Lichtquelle zuordnen zu können. Ein Beispiel für eine derartige Vorgehensweise ist in der folgenden Tabelle dargestellt:

Tabelle:

| Lichtquelle | #1 | #2 | #3 | #4 | #5 | #6 | #7 |
|---|---|---|---|---|---|---|---|
| Erfassung | | | | | | | |
| #1 | 1 | 0 | 1 | 0 | 1 | 0 | 1 |
| #2 | 0 | 1 | 1 | 0 | 0 | 1 | 1 |
| #3 | 0 | 0 | 0 | 1 | 1 | 1 | 1 |

Hier wird also für 7 Lichtquellen #1-#7 dreimal das Erfassen der Lage der Reflexe (Erfassung #1 - #3) durchgeführt, wobei jeweils die mit "1" gekennzeichnet Lichtquellen angeschaltet und die mit "0" gekennzeichneten Lichtquellen ausgeschaltet. Von der Lichtquelle verursachte Reflexe oder Reflex-Paare weisen das gleiche Verhalten wie die Lichtquelle auf, d.h. sie sind vorhanden, wenn die Lichtquelle eingeschaltet ist, und nicht vorhanden, wenn die Lichtquelle ausgeschaltet ist. Schreibt man dieses Verhalten als Binärzahl, wobei eine 1 einem vorhandenen Reflex und eine 0 einem nicht vorhandenen Reflex entspricht (also z.B. 001, wenn der Reflex bei der Erfassung #1 nicht vorhanden ist und in der Erfassungen #2 und #3 vorhanden ist), ist die zugeordnete Lichtquelle diejenige, die in ihrer Spalte in der obigen Tabelle die gleiche Binärzahl über die drei Erfassungen aufweist (in dem Beispiel die Lichtquelle #4).

Das exzentrische Beleuchten ruft auf dem Brillenglas für jede verwendete Lichtquelle im allgemeinen Fall zwei Reflexe hervor: einen auf der Vorder- und einen auf der Rückseite. Es kann auch vorkommen, dass einer oder beide davon auf dem Brillenglas nicht auftreten, z.B. weil das Brillenglas zu klein ist oder zu stark verkippt ist). Bei der Reflexion an der Rückseite tritt die Brechung des Lichts sowohl am Ein- und am Austrittspunkt an der Brillenglasvorderseite auf. Bei einem Rückseitenreflex liegt die Reflexerscheinung scheinbar am Austrittspunkt nach der Reflexion an der Rückseite. Wie dicht die Vorderseiten- und die Rückseitenreflexe zusammenliegen, hängt von den Krümmungsradien des Brillenglases ab: Wenn sie sehr ähnlich sind, liegen beide jeweils eng beieinander, sonst sind sie auch weit voneinander entfernt oder einer von beiden tritt nicht auf, weil er außerhalb des Brillenglases läge. Wenn Vorder- und Rückseitenreflex eng beieinander liegen, hat das Brillenglas aber auch eine kleine Wirkung und dann kommt es auf die Unterscheidung zwischen beiden Reflexen nicht mehr so sehr an. Mit Strahldurchrechnung kann man für jede angenommene Lage und Orientierung des Brillenglases die Lage der Reflexbilder im Kamerabild (oder im Fall mehrere Kameras: in den mehreren Kamerabildern) berechnen.

Die Berechnung von Position und/oder Orientierung wird iterativ ausgeführt und kann wie bereits erwähnt von anderen Schritten, beispielsweise dem exzentrischen Beleuchten und dem Erfassen der Lage des mindestens einen Reflexes, durchgeführt werden. Man beginnt mit einem Startwert für Orientierung und Position des Brillenglases. Beispielsweise kann man als Startwert von keiner Verkippung um X- und Y-Achse, Halterung genau in der Mitte des Brillenglases und der Verdrehung um die Z-Achse ausgehen, die sich aus der erfassten scheinbaren Lage der Permanentmarkierungen ergibt. Für jede Pose, die in einer folgenden Iteration vorkommt, werden dann erwartete scheinbare Lage der Permanentmarkierungen und auch erwartete Lagen des mindestens einen Reflexes berechnet. Erwartete Lagen sind dabei Lagen, die sich für bestimmte Werte von Position und Orientierung durch Rechnung ergeben. Durch Vergleich zwischen der erwarteten Lage und der erfassten scheinbaren Lage der Permanentmarkierungen und des mindestens einen Reflexes kann dann ein Wert für eine Verdrehung des Brillenglases sowie den Versatz berechnet werden. Hierfür kann man kleine Änderungen (Variation) der Position und Orientierung des Brillenglases annehmen für sie berechnen, welche Auswirkungen das dann auf die erwartete scheinbare Lage der Permanentmarkierungen und des mindestens einen Reflexes hat. Dies wird auch als Variationsrechnung bezeichnet, siehe beispielsweise Wikipedia-Artikel "Variationsrechnung" Stand 14.7.2017. Man verändert nun in systematischer Weise in der Rechnung die Position und Orientierung, z.B. Verschiebung des ERP in drei Richtungen X, Y und Z sowie drei räumliche Drehungen (z.B. ausgedrückt durch Eulerwinkel oder um Koordinatenachsen des Weltkoordinatensystems) so lange, bis die Abweichungen zwischen den so berechneten und den erfassten Lagen von Permanentmarkierungen und ggf. Reflexen minimal sind. Mathematisch kann man dazu z.B. eine Minimierungsaufgabe numerisch lösen, bei der z.B. die Summen (gewichteter) quadrierter Abweichungen der berechneten Lagen der Bilder der Markierungspunkte und der zusätzlichen Reflexe von den entsprechenden Lagen dieser gemessenen Bestimmungsstücke minimiert wird. Für die Lösung derartiger Minimierungsaufgaben gibt es eine Vielzahl möglicher Herangehensweisen. Einige Möglichkeiten sind in Press et. al, Numerical Recipes, Second Edition (1992) beschrieben. Wenn die gewichtete Summe der quadrierten Abweichungen, wie sie in diesem Buch "Numerical Recipes" erläutert ist, oder dessen Änderungen zwischen den einzelnen Iterationen unter eine vorgegebene Schwelle fallen, wird das Verfahren beendet und das erreichte Ergebnis gibt mit der durch die Schwelle bestimmten Genauigkeit Position und Orientierung des Brillenglases an.

Erfindungsgemäß umfasst das Bestimmen von Position und/oder Orientierung des Brillenglases eine iterative Berechnung von Position und/oder Orientierung des Brillenglases.

Mit so einer iterativen Berechnung kann die Pose des Brillenglases z.B. als Position des ERP und Verkippung und Verdrehung um die Achsen des Weltkoordinatensystems effizient bestimmt werden.

Zusätzlich oder alternativ zu der oben erwähnten Bereitstellung mehrere Lichtquellen können auch mehrere Beobachtungsrichtungen für das Erfassen der Lage des mindestens einen Reflexes und/oder der scheinbaren Lage der Permanentmarkierungen verwendet werden, beispielsweise indem mehrere Kameraeinrichtungen bereitgestellt werden oder eine Position einer einzigen Kameraeinrichtung nacheinander verändert wird. Statt einer Kameraeinrichtung mit zugehörigem Strahlteiler und koaxial wirkender Lichtquelle wie in der EP 1 646 855 B1 kann man also auch mehrere derartige Anordnungen mit Kameraeinrichtung und Lichtquelle vorsehen, um auf diese Weise die scheinbare Lage der Permanentmarkierungen stereogrammetrisch durch Bündelausgleichsrechnung, auch als Blockbündelausgleichsrechnung bezeichnet, zu ermitteln. Details hierzu finden sich in dem Wikipedia-Artikel "Blockbündelausgleichsrechnung", Stand 15.07.2017, erläutert. Zur Bestimmung der relativen Lagen der Kameraeinrichtung kann durch die Kameraeinrichtungen einen Gegenstand mit in aufgenommenen Bildern gut identifizierbaren Punkten in etlichen bekannten Posen aufgenommen werden, was dann eine Kalibrierung des Systems darstellt. Mit dieser Kalibrierung können dann unbekannte Posen von Brillengläsern bestimmt werden. Der nach der EP 1 646 855 B1 bewegte Retroreflektor oder ein rotierendes Prisma nach einer anderen Ausführung nach der EP 2 597 451 A2 können dabei für die mehreren Anordnungen gemeinsam wirken, d.h. man braucht nur eine derartige Einrichtung für alle Kameraeinrichtungen zusammen.

Auch durch diese Verwendung mehrerer Beobachtungsrichtungen kann die Genauigkeit oder die Konvergenzgeschwindigkeit erhöht werden. Dann kann jeder Beobachtungsrichtung mindestens eine Lichtquelle zum exzentrischen Beleuchten zugeordnet sein, die wiederum, wie oben erläutert, abwechselnd aktiviert werden können, um die Reflexe den Lichtquellen zuordnen zu können. Es können aber auch die exzentrischen Beleuchtungsquellen für alle Kameras gemeinsam benutzt werden, die ihr Reflexbild auf dem Brillenglas erkennen können.

Für das exzentrische Beleuchten kann man bevorzugt eine andere Lichtwellenlänge als bei einer Beleuchtung zum Erfassen der scheinbaren Lage der Permanentmarkierungen verwenden. Man wählt dann die Lichtwellenlänge für das exzentrische Beleuchten zweckmäßig so, dass das Brillenglas ihr Licht in Transmission stark absorbiert, damit man Reflexe von der Brillenglasvorderseite sicher von Reflexen von der Brillenglasrückseite unterscheiden kann. Manche Entspiegelungen haben jenseits des sichtbaren Wellenlängenbereichs einen gegenüber dem sichtbaren Bereich erhöhten Reflexionsgrad, was diesem Verfahren entgegenkommt. Allerdings muss die Kameraeinrichtung (oder im Falle mehrerer Kameraeinrichtungen: mindestens eine) für Licht der Lichtwellenlänge zum exzentrischen Beleuchten empfindlich sein und ihrer Optik muss dafür durchlässig sein.

Das Erfassen der scheinbaren Lage der Permanentmarkierungen kann hingegen eine Lichtwellenlänge verwenden, bei der das Brillenglas eine hohe Transmittivität aufweist, (und entsprechend eine geringe Reflektivität, z.B. weißes Licht), um so z.B. bei dem Verfahren der EP 1 646 855 B1 die Permanentmarkierungen deutlich sichtbar zu machen.

In manchen Ausführungsbeispielen, aber nicht darauf beschränkt, das Erfassen der Lage der Permanentmarkierungen mit einer ersten Lichtwellenlänge und das Erfassen der Lage des mindestens einen Reflexes mittels Beleuchtung mit einer zweiten Lichtwellenlänge erfolgt, wobei das Brillenglas für die zweite Lichtwellenlänge eine höhere Absorption aufweist als für die erste Lichtwellenlänge.

In manchen Ausführungsbeispielen kann die zweite Wellenlänge jenseits eines sichtbaren Wellenlängenbereichs liegt.

Dies kann den Vorteil haben, dass die erste und zweite Wellenlänge wie zuvor beschrieben vorteilhaft gewählt werden können, um gewünschte Transmittivitäts-, Absorptions- und/oder Reflexionseigenschaften aufzuweisen.

Erfindungsgemäß umfasst die markierungsunabhängige Zusatzinformation wie oben erwähnt Haltecharakteristiken des Halters. Bei bekanntem Halter (z.B. Saughalter) und bekannter Form des Brillenglases kann die Position und/oder Orientierung des Brillenglases zumindest abgeschätzt werden, d.h. der Halter weist Haltecharakteristiken auf, die zu einer bestimmten Position und/oder Orientierung des Brillenglases führen. Diese Haltecharakteristiken können mit einem Finite-Elemente-Verfahren (siehe beispielsweise Wikipedia-Artikel Finite-Elemente-Methode Stand 27.06.2017) berechnet werden, um Halteorientierungen zu berechnen. Zur Vereinfachung kann auch ein Verfahren verwendet werden, bei welchem eine Halteorientierung, das ist der räumliche Winkel zwischen der Flächennormalen im Mittelpunkt des Halters (beispielsweise Saughalters) und der Halterichtung (Symmetrieachse des Halters, z.B. Saughalters) für einfache Regelflächen, z.B. für sphärische und torische Flächen, tabelliert wird. Zusätzlich wird vorab berechnet und tabelliert, wie sich die Ansaugcharakteristik der Fläche ändert, wenn zusätzliche Momente auf das Brillenglas wirken. Für torische Flächen kann zwischen vorausberechneten oder experimentell verifizierten Halteorientierungen interpoliert werden und es können zusätzliche Momente berücksichtigt werden, die sich aufgrund der Schwerpunktlage des Brillenglases ergeben, wenn es an einer in der jeweiligen Rechnung unterstellten Position angesaugt wäre.

Mit einer Finite-Elemente-Rechnung (FE) kann man also Haltecharakteristiken eines Halters, wie eines Saughalters berechnen: dies ist ein Kontaktproblem mit großen Verformungen und möglicherweise auch noch nicht-linearen Materialeigenschaften, ist also nicht in der Kategorie einfacher FE-Aufgaben. Für solche Berechnungen werden bei einem Saughalter die Materialkonstanten des Saughalters, der Ansaugdruck, das Gleitverhalten der in Kontakt tretenden Materialien (Brillenglas und Saughalter) und auch die Form der Kontaktfläche usw. benötigt. Es ist aber möglich, die Ansaugcharakteristiken für eine ausreichend große und genügend eng gestaffelte Menge von lokalen Ersatzflächen vorauszuberechnen und einschließlich ihrer Nachgiebigkeit gegenüber äußeren Momenten in einer Tabelle zu tabellieren. Statt mit den Gleitsichtflächen selbst sucht man sich dann für jeden Haltepunkt die bestpassende naheliegende vorausberechnete Ersatzfläche, d.h. eine Ersatzfläche, die nach einem Kriterium (z.B. Summe der kleinsten Quadrate) am wenigsten von der tatsächlichen Fläche, z.B. Gleitsichtfläche, abweicht, z.B. in einem Kreisringbereich, der ungefähr der mutmaßlichen Kontaktfläche für viele Ansaugsituationen entspricht. Die Tabelle zeigt für jede der Ersatzflächen, wie die Normale der angesaugten Ersatzfläche relativ zur Halterachse liegt, bei welcher Stelle die Halterachse die Ersatzfläche im angesaugten Fall schneidet, und sie zeigt, wie sich diese Koordinate unter dem Einfluss äußerer Momente ändert und wie sich der Winkel zwischen der Halterachse und der Flächennormalen unter den Einflüssen äußerer Momente ändert. Dies alles macht es dann möglich, per Interpolation die Pose des in einem gegebenen oder berechneten Haltepunkt gehaltenen Brillenglases zu bestimmen.

Die Interpolation der Halteorientierung für vorausberechnete charakteristische Flächen, die die Form einer angesaugten Brillenglasfläche gut annähern, kann statt mit torischen Flächen auch mit anderen Regelflächen vorgenommen werden, zum Beispiel mit Polynomen in zwei Dimensionen, Zernike-Polynomen oder Zernike-Tatian-Polynomen. Informationen zu diesen Funktionen finden sich in Bernd Dörband, Analyse optischer Systeme (Diss, Stuttgart), Kapitel 4.3.1 und 4.3.2 (1986), sowie in B. Dörband, H. Müller, H. Gross, Handbook of Optical Systems Volume 5, Chapter 47.8 (2012).

Als ausgewählte Polynome können beispielsweise auch normale Polynome in zwei Veränderlichen

$$f(x,y) = \sum_{i,j=0}^{n} a_{ij} * (x - x_m)^i * (y - y_m)^j$$

mit einer passenden Obergrenze n sein. $x_m$ und $y_m$ bezeichnen den Mittelpunkt des Brillenglases, $a_{ij}$ sind Koeffizienten, und n ist eine Obergrenze.

Eine bevorzugte Möglichkeit ist, die Brillenglasfläche lokal durch einen Torus anzunähern, der im Berührungspunkt zu dem Halter das Brillenglas mit dem Äquator des Torus tangential berührt und da genau die gleichen Hauptkrümmungen wie das Brillenglas aufweist. Diese Bezeichnungen bei torischen Flächen sind z.B. im bereits zitierten "Handbuch der Augenoptik" S. 24ff erläutert. Diese Tori kennzeichnet man zweckmäßig durch ihre "Pfeilhöhen" entlang der Hauptmeridiane bei einer gegebenen Basislänge, z.B. 20 mm oder 30 mm. Es ergibt sich dann eine zwei-parametrige Interpolationstabelle für die Ansaugcharakteristik, die primär den Winkel zwischen Normalenvektor auf dem Brillenglas und Achse des Halters liefert. Bevorzugt ermittelt man zusätzlich noch, wie stark der Halter, insbesondere Saughalter, nachgibt, wenn z.B. wegen der Gewichtskraft zusätzliche Momente auf das auf dem Halter angeordnete, insbesondere angesogene, Brillenglas einwirken. Dies wird bevorzugt für mehrere Richtungen durchgeführt, denn die Haltecharakteristik kann von der Flächengestalt abhängen. Die Gewichtskraft und die zusätzlichen Momente haben auch einen kleinen Einfluss auf die Lage des Schnittpunkts der Halterachse mit der betrachteten Torusfläche.

Die oben erwähnten Normalenvektoren des gehaltenen Glases können für passend gestufte Werte tabelliert werden, um darin interpolieren zu können. Die Stufung wählt man zweckmäßig so, dass sie alle gängigen Brillenglasoberflächen in einer kleinen Umgebung aller möglichen Halterpositionen so gut abdeckt, dass die Halteorientierungen in einem konkreten Fall genau genug durch Interpolationen bestimmbar sind. Die zweckmäßige Stufung kann auch von der Art der verwendeten Ersatzflächen, z.B. Tori, abhängen. Die tabellierten Formen müssen dabei nur für eine Richtung der Orientierung berechnet werden, nicht für alle möglichen, z.B. für den meridionalen Schnitt des Torus entlang der Y-Achse so, dass in diesem Schnitt die kleinere Krümmung auftritt. Durch die so vorberechneten Halteorientierungen ergibt sich die Richtung der Flächennormalen im angesaugten Zustand. Für eine Fläche, die nur im Haltepunkt gedreht zum vorberechneten Modell passt (der Haltepunkt ist dabei der Schnittpunkt der Achse des Halters mit dem Brillenglas), weil ihre Hauptnormalenschnitte (definiert wie in der Differentialgeometrie, Bronstein-Semendjajew, Taschenbuch der Mathematik, 21. Auflage, Kapitel 4.3) nicht wie bei den tabellierten Ersatzflächen liegt, transformiert man die durch die Gewichtskraft auftretenden Momente erst in ein lokales Koordinatensystem, wie das der Ersatzfläche, in dem die Haltecharakteristik tabelliert ist, berechnet dann dort die Richtung zwischen dem Flächen-Normalenvektor und dem Halter in der tabellierten Stellung und transformiert das Ergebnis zurück in das Weltkoordinatensystem.

Bei nichtsphärischen und nichttorischen Flächen wird die bei der Ansaugung berührte Fläche also in der Rechnung lokal um den jeweils zu berücksichtigenden Ansaugpunkt durch eine torische Fläche ersetzt, die in einer Umgebung, die dem Saughalterand entspricht, bestmöglich zur Brillenglasfläche passt, zum Beispiel im Quadratmittel über der Kontaktfläche minimalen Abstand zu den vorberechneten torischen Ersatzfläche hat. Dabei kann auch noch eine lokale Drehung notwendig sein, damit man bei den lokalen Ersatzflächen immer davon ausgehen kann, dass die Krümmung z.B. entlang der Y-Achse die kleinere ist.

Wenn das Brillenglas nun an so einem Punkt gehalten wird, dann liegt sein Schwerpunkt in den meisten Fällen nicht mittig unter oder über dem Haltepunkt. Durch die Schwerkraft wirkt dann noch eine Kombination von Momenten, die sich aus der relativen Lage des Schwerpunkts und dem Gewicht des Brillenglases ergibt. Mithilfe tabellierter experimentell oder mit Finiter Elemente-Rechnungen ermittelter Einflüsse von zusätzlichen Momenten kann man dann die zusätzliche Verkippung wegen der Schwerkraft als Interpolation bestimmen. Die so ermittelte Halteorientierung kann beispielsweise als Startwert für die Orientierung in den oben genannten iterativen Verfahren verwendet werden, welches dann schnell konvergiert, da mit der vorberechneten Orientierung bereits ein relativ treffender Startwert für das Verfahren vorgegeben werden kann. Eine solche Berechnung über die Haltecharakteristik wird auch in jedem weiteren Iterationsschrittentsprechend ausgeführt.

Diese Haltecharakteristiken des Saughalters werden in Kombination mit der Lage des mindestens einen Reflexes als markierungsunabhängige Zusatzinformation verwendet. Wenn die Genauigkeit einer Bestimmung nur auf Basis der Haltecharakteristiken und der erfassten scheinbaren Lage der Permanentmarkierungen ausreichend ist, kann auf weitere markierungsunabhängige Zusatzinformation verzichtet werden. In diesem Fall kann eine iterative Optimierung, ähnlich wie oben für den mindestens einen Reflex beschrieben, auf Basis der Haltecharakteristik und, der erfassten scheinbaren Lagen der Permanentmarkierungen durchgeführt werden. Die Genauigkeit hängt hier von der genauen Kenntnis der mechanischen Materialeigenschaften des Halters, z.B. Saughalters, ab.

Erfindungsgemäß wird die iterative Berechnung auf Basis einer Haltecharakteristik und der erfassten scheinbaren Lagen der Permanentmarkierungen durchgeführt werden.

Dies hat den Vorteil, dass die Genauigkeit des Verfahrens durch die Kenntnis der Haltecharakteristik weiter verbessert werden kann.

Eine Änderung der Materialeigenschaften z.B. durch Alterung kann die Genauigkeit verschlechtern.

Daher ist es bevorzugt, die Haltecharakteristik mit dem erfassten mindestens einen Reflex zu kombinieren, weil in dieser Kombination der mindestens eine Reflex sehr empfindlich auf Verkippungen reagiert und damit deutlich Auskunft über deren Größe und Richtung gibt. Außerdem sichert sie das Verfahren gegen die Fehlereinflüsse zeitlich sich ändernder Eigenschaften des Halters.

Daher kann in manchen Ausführungsbeispielen, aber nicht darauf beschränkt, die iterative Berechnung ferner auf Basis von mindestens einem erfassten Reflex erfolgen.

Die Lage der Reflexe der exzentrischen Beleuchtung muss dabei nicht statisch z.B. im angesaugten Zustand auf einem Saughalter bestimmt werden, sondern es kann auch die Änderung der Lage während dem Einbringen des Brillenglases, beispielsweise während des Ansaugens durch den Saughalter, bestimmt werden. Hierzu wird bevorzugt das Erfassen der scheinbaren Lage der Permanentmarkierungen sowie der Reflexe während des Ansaugens wiederholt durchgeführt. Hierdurch kann auch der Ansaugvorgang oder allgemein der Vorgang des Einlegens des Brillenglases in oder auf den Halter charakterisiert werden.

In manchen Ausführungsbeispielen kann, wie zuvor beschrieben, das Erfassen der scheinbaren Lage des mindestens einen Reflexes auf dem Brillenglas ein mehrmaliges Erfassen bei einer Bewegung des Brillenglases umfassen.

In manchen bevorzugten Ausführungsbeispielen kann die Bewegung des Brillenglases durch ein Ansaugen eines Saughalters herbeigeführt werden und die markierungsunabhängige Zusatzinformation kann eine Charakterisierung des Ansaugvorgangs auf dem Halter umfassen. Dies hat den Vorteil, dass die Bewegung des Brillenglases während des Ansaugvorgangs am Saughalter genutzt wird, um die Lage des Brillenglases zu bestimmen. Dies kann insbesondere dann von Vorteil sein, wenn die scheinbare Lage von Permanentmarkierungen auf der dem Erfassungssystem abgewandten Seite erfasst wird, die scheinbare Lage also durch Brechung am Brillenglas beeinflusst wird, wie zuvor beschrieben. In diesem Fall kann durch die Daten, die während der Bewegung gewonnen werden und durch die bekannte Charakteristik des Ansaugvorgangs die Lage des Brillenglases genauer bestimmt werden.

Erfindungsgemäß umfasst die iterative Berechnung in jeweiligen Iterationsschritten einen Vergleich zwischen einer erwarteten Lage des Brillenglases und einer erfassten scheinbaren Lage der Permanentmarkierungen und des mindestens einen Reflexes.

Dies hat den Vorteil, dass die Genauigkeit des Verfahrens weiter verbessert werden kann, wie zuvor und nachfolgend beschrieben.

Wenn man mehrere Beobachtungsrichtungen hat, kann man in einer nicht beanspruchten Variante durch "Vorwärtsschneiden" die Lagen beider Permanentmarkierungen auch ohne die Haltecharakteristik des Saughalters bestimmen, wenn auch nicht so präzise. Die räumlichen Lagen der beiden Permanentmarkierungen bekommt man so relativ gut. Eine Verkippung quer zur Verbindungslinie zwischen den beiden (scheinbaren) Lagen der Markierungspunkte kann man so aber nur schlecht bis gar nicht ermitteln. An der Stelle kommen die zusätzlichen Reflexe oder markierungsunabhängige Zusatzinformation aus der Haltercharakteristik ins Spiel: Sie liefern vor allem auch die Verkippung des Glases um die Verbindungslinie beider (scheinbaren) Markierungen, wie dies oben erläutert wurde.

Das Verfahren kann verwendet werden, um eine Stempelung auf das Brillenglas richtig auszurichten. Durch das Bestimmen von Position und/oder Orientierung des Brillenglases kann dabei eine genaue Positionierung der Stempelung erfolgen.

In anderen Worten können durch die Bestimmung von Position und/oder Orientierung Fehler ausgeglichen werden, die aus dem Unterschied zwischen scheinbarer Lage und tatsächlicher Lage ergeben,

- wenn die Beobachtungsrichtung beim Erfassen der scheinbaren Lage nicht normal auf den optischen Mittelpunkt des Brillenglases sieht, sondern schräg, was sich aus der Orientierung des Brillenglases auf dem Halter ergibt. Dies tritt, wie erläutert, insbesondere dann auf, wenn das Brillenglas mit einem Saughalter gehalten wird.

- wenn das Erfassen der scheinbaren Lage (beispielsweise durch eine Kamera) in einer endlichen Entfernung und insbesondere kürzeren Entfernung als die oben genannten 400 Millimeter geschieht, und/oder

- die Permanentmarkierung des Brillenglases auf dessen Rückseite angebracht ist, wobei das Erfassen der scheinbaren Lage von der Brillenglasvorderseite aus erfolgt.

Die scheinbare Lage der Permanentmarkierungen, die auf der Brillenglasvorderseite erscheint, hängt nämlich von der Betrachtungsrichtung ab und, wenn man nicht aus dem Unendlichen auf das Brillenglas sieht, auch von der Lage des Brillenglases.

Zudem wird eine Vorrichtung zum Bestimmen von Position und/oder Orientierung eines Brillenglases auf einem Halter bereitgestellt.

Die Vorrichtung weist eine Bereitstellungseinrichtung zum Bereitstellen einer erfassten scheinbaren Lage von Permanentmarkierungen auf. Die Vorrichtung kann auch eine Erfassungseinrichtung zum Erfassen der scheinbaren Lage der Permanentmarkierungen auf dem Brillenglas aufweisen. Sie ist gekennzeichnet durch eine Recheneinrichtung zum Bestimmen von Position und/oder Orientierung des Brillenglases auf Basis der bereitgestellten erfassten scheinbaren Lage der Permanentmarkierungen und einer markierungsunabhängigen Zusatzinformation.

Diese Vorrichtung kann entsprechend dem bereits diskutierten Verfahren Position und/oder Orientierung durch Verwendung der markierungsunabhängigen Zusatzinformation bestimmen.

Bevorzugt weist die Vorrichtung eine oder mehrere Beleuchtungseinrichtungen auf zum exzentrischen Beleuchten des Brillenglases, wobei die Erfassungseinrichtung zudem eingerichtet ist, eine Lage mindestens eines durch das exzentrische Beleuchten hervorgerufenen Reflexes als markierungsunabhängige Zusatzinformation zu erfassen. Bevorzugt umfasst die Vorrichtung mehrere solche Lichtquellen, die besonders bevorzugt verschieden weit von der optischen Achse der Erfassungseinrichtung für die Erfassung der Permanentmarkierungen räumlich angeordnet sind. Diese Ausgestaltung der Vorrichtung entspricht den oben erläuterten Verfahren, bei denen mindestens ein Reflex als markierungsunabhängige Zusatzinformation verwendet wird. In diesem Fall ist die Recheneinrichtung zum Bestimmen von Position und/oder Orientierung zum Bestimmen von Position und/oder Orientierung des Brillenglases auf Basis der Lage der Permanentmarkierungen und der Lage des mindestens einen Reflexes eingerichtet.

Zusätzlich verwendet die Vorrichtung eine Haltecharakteristik des Halters, wie oben für das Verfahren detailliert erläutert, als markierungsunabhängige Zusatzinformation. Diese Haltecharakteristik kann in einem Speicher der Vorrichtung gespeichert sein oder auch über ein Kommunikationsnetzwerk, wie das Internet, von einem Server abrufbar sein.

Die Vorrichtung ermöglicht wie das entsprechend oben diskutierte Verfahren eine einfache Bestimmung von Position und/oder Orientierung des Brillenglases, auf deren Basis dann weitere Schritte wie ein Aufbringen einer Stempelung vorgenommen werden können.

Die Recheneinrichtung kann dabei insbesondere ein entsprechend programmierter Computer sein. Dementsprechend wird auch ein Computerprogramm bereitgestellt, welches, wenn es auf einem Prozessor ausgeführt wird, eines der oben beschriebenen Verfahren steuert und durchführt.

Die vorliegende Erfindung wird nun anhand von Ausführungsbeispielen näher erläutert. Es zeigen:

Figuren 1A bis 1D sowie 2A und 2B Diagramme zur Veranschaulichung der Vorgänge beim Halten eines Brillenglases auf einem Saughalter,

Fig. 3 eine Vorrichtung zur Bestimmung von Position und Orientierung eines Brillenglases gemäß einem Ausführungsbeispiel,

Fig. 4 Beispiele für Reflexe in der Vorrichtung der Fig. 3,

Fig. 5 die Vorrichtung der Fig. 3 mit einer gekippten Lage des Brillenglases,

Fig. 6 Beispiele für Reflexe bei der gekippten Lage der Fig. 5,

Fig. 7A-7F ein Darstellungen zur Veranschaulichung einer scheinbaren Lage von Permanentmarkierungen,

Fig. 8 und 9 Flussdiagramme von Verfahren gemäß Ausführungsbeispielen der Erfindung, und

Fig. 10 ein Diagramm zur Veranschaulichung der Lage von Koordinatenachsen, wie sie zur Beschreibung der vorliegenden Erfindung verwendet werden.

Im Folgenden werden Ausführungsbeispiele der vorliegenden Anmeldung erläutert.

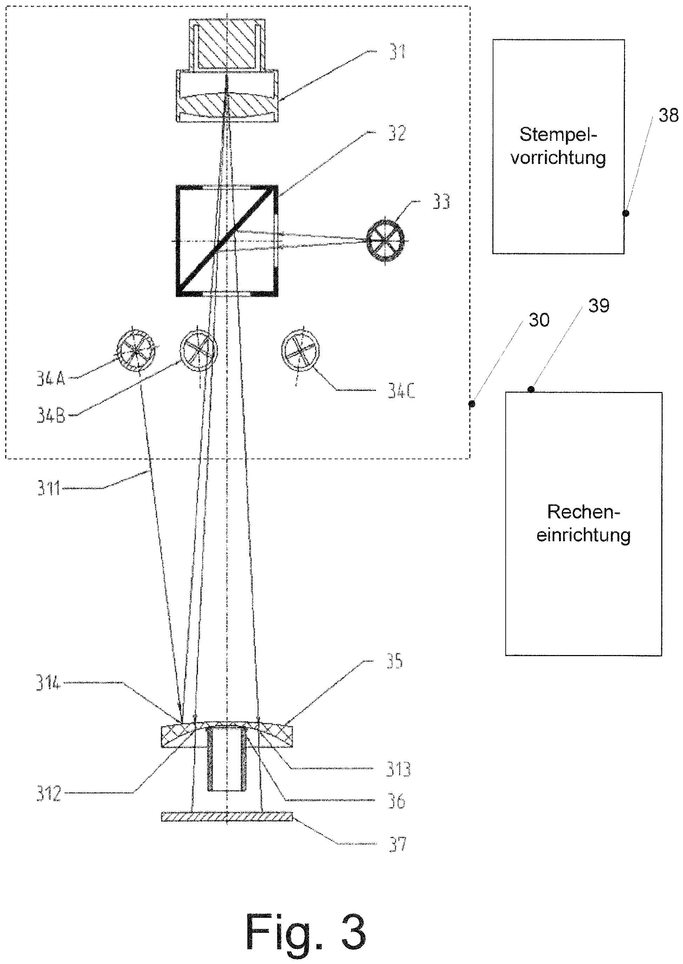

Die Fig. 3 zeigt eine Vorrichtung zur Bestimmung einer Position und Orientierung eines Brillenglases 35 auf einem Saughalter 36, welcher das Brillenglas 35 auf seiner konkaven Seite des Brillenglases ansaugt. Die Vorrichtung umfasst eine Beleuchtungs- und Bildaufnahmeeinrichtung 30, einen Retroreflektor 37 sowie eine Recheneinrichtung 39.

Die Beleuchtungs- und Bildaufnahmeeinrichtung 30 umfasst eine Kamera 31, mit welcher Bilder von dem Brillenglas 35 auf dem Saughalter 36 aufnehmbar sind. Zur Beleuchtung des Brillenglases 35 zur Bestimmung einer scheinbaren Lage von Permanentmarkierungen 312, 313 des Brillenglases dient eine Lichtquelle 33, welche über einen Strahlteiler 32 koaxial (umgangssprachlich manchmal auch als konzentrisch bezeichnet) zu einer optischen Achse 310 der Kamera 31 eingekoppelt wird. Diese Beleuchtung und die damit verbundene Bestimmung der scheinbaren Lage von Permanentmarkierungen erfolgt, wie in der EP 1 646 855 B1 beschrieben. Dabei beleuchtet Licht von der annähernd punktförmigen Lichtquelle 32 das Brillenglas so dass das von dem Strahlteiler 32 zum Brillenglas 35 gesandte Licht scheinbar aus der Eintrittspupille eines Objektivs der Kamera 31 kommt, d.h. konzentrisch zur optischen Achse 310 ist. Diese Beleuchtung, welche auch als koaxiale Auflichtbeleuchtung bezeichnet wird, bestrahlt das Brillenglas 35, dessen Lage bestimmt werden soll. Das Licht durchläuft das Brillenglas mit den Permanentmarkierungen 312 und 313, die im gezeichneten Beispiel auf der Brillenglasrückseite angebracht sind, fällt dann auf einen Retroreflektor 37, welcher bewegbar ist, und läuft dann annähernd auf dem gleichen Weg zurück bis zur Kamera 31. Das Objektiv der Kamera 31 bildet dann die Permanentmarkierungen mit dem Licht kontrastreich ab, das ursprünglich aus der koaxialen Auflichtbeleuchtung kommt und über den Retroreflektor 37 insgesamt zweimal durch das Brillenglas gelaufen ist.

Diese Bildaufnahme geschieht bei Permanentmarkierungen 312, 313, die auf der Rückseite des Brillenglases 35, wie eingangs beschrieben (d. h. der dem Halter 36 zugewandten Seite), angeordnet sind, nicht immer genau aus der vorgeschriebenen Richtung, die eingangs erläutert wurde. Das führt wegen der Lichtbrechung an der Brillenglasvorderfläche zu einer scheinbaren Lage der Permanentmarkierungen, welche sich von der realen Lage unterscheidet. Bei einer Verkippung des Brillenglases 35 ändert sich die scheinbare Lage der Permanentmarkierungen auf der Brillenglasvorderseite, die von der Kamera 31 gesehen wird.

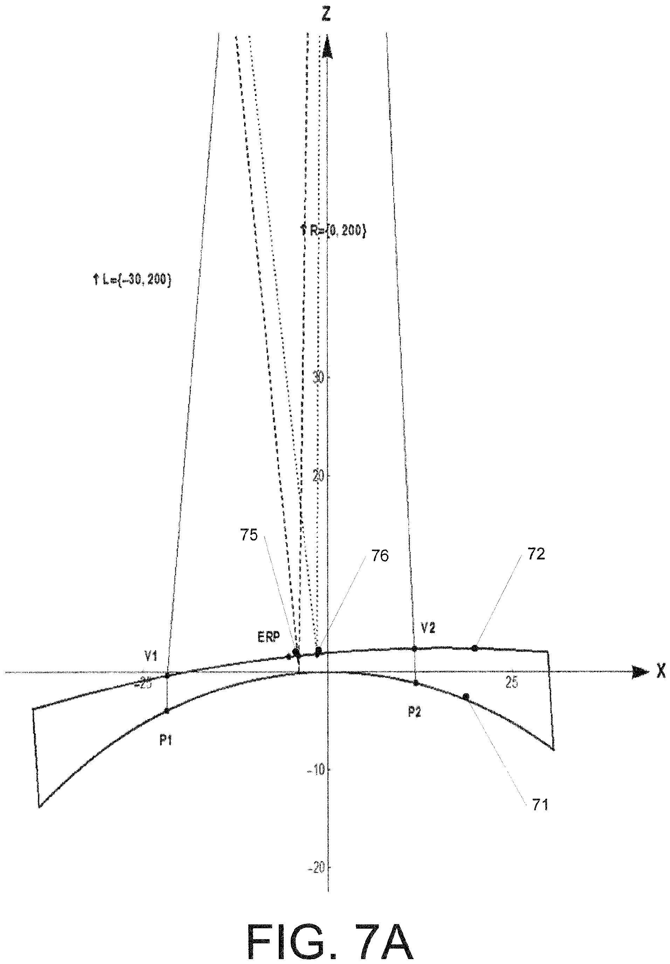

Dies wird unter Bezugnahme auf die Fig. 7A-7F erläutert. Die Fig. 7A-7F zeigen jeweils ein Brillenglas mit einer Brillenglasvorderseite 72 und einer Brillenglasrückseite 71 und mit Permanentmarkierungen P1, P2 auf der jeweiligen Brillenglasrückseite 71. Je nach Verkippung des Brillenglases auf dem Halter (nicht gezeichnet) und Form der Brillenglasvorderseite 72 und der Brillenglasrückseite 71 erkennt die Kamera 31 die Permanentmarkierungen auf der jeweiligen Brillenglasvorderseite 72 an verschiedenen scheinbaren Lagen V1 und V2. Diese scheinbaren Lage V1 und V2 ergeben sich einfach über das Brechungsgesetz aus der tatsächlichen Lage der Permanentmarkierungen P1, P2. Die Figuren zeigen gestrichelt jeweils einen Strahl von einer externen Lichtquelle (nicht gezeichnet, da oberhalb des gezeichneten Ausschnitts), es könnte z.B. die Lichtquelle 34A sein. Auf der Vorderseite ist jeweils noch der ERP als Punkt eingezeichnet. Daran sieht man, um wieviel das Glas auf dem Glashalter dezentriert ist. Bei diesen Zeichnungen ist eine sphärische Brillenglasrückseite 71 angenommen und dass die auf das Brillenglas wirkenden Momente wegen der Verlagerung des Schwerpunkts so klein sind, dass sie die Darstellung nicht beeinflussen. Es ist weiterhin angenommen, dass der Haltepunkt auf der Rückseite immer bei {0,0} in der Zeichnung liegt.

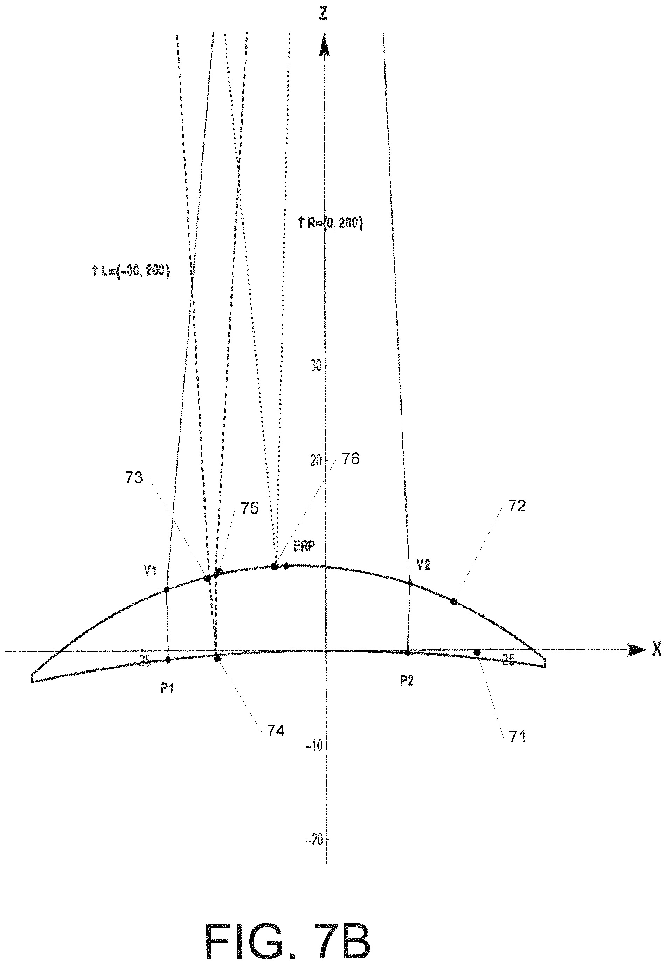

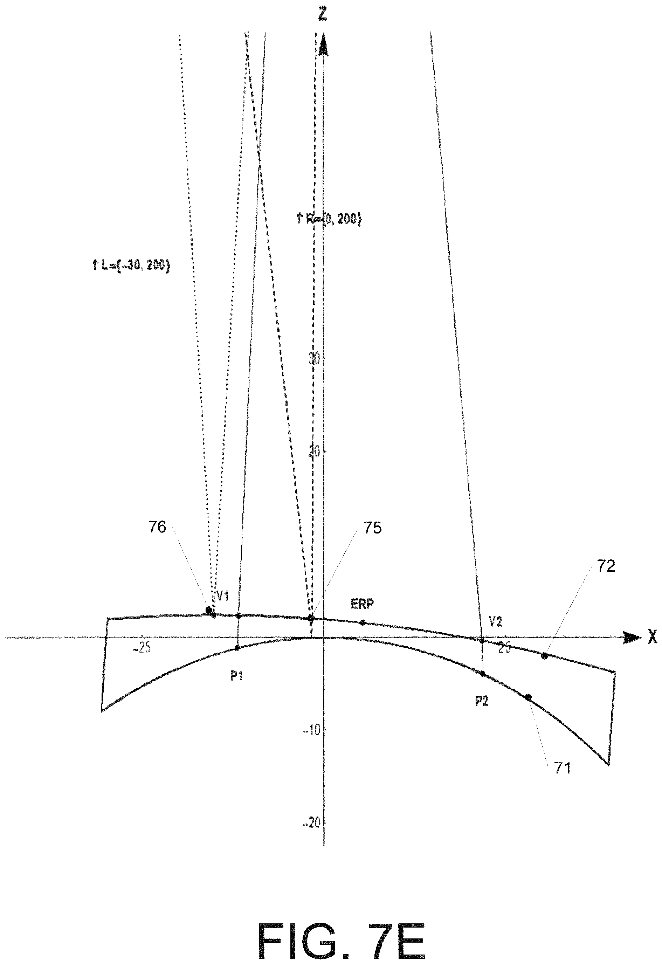

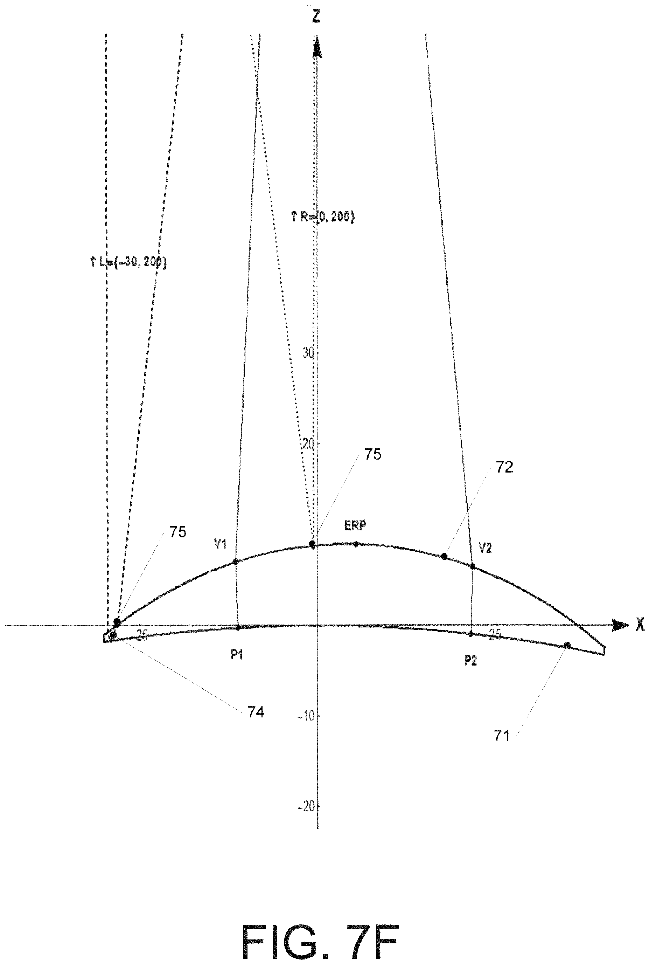

Wenn Momente wegen der Gewichtsverteilung wirkten, könnte der Haltepunkt Fig. 7A und 7B sowie in Fig. 7E und 7F sich etwas entlang der Z-Achse bewegen, also zu {0,zh} mit einem kleinen zh wird. Die tatsächliche Kippung könnte außerdem tatsächlich etwas größer werden als gezeichnet.

In den Figuren 7A-7F sind die Lichtstrahlen als durchgezogene Linien von den auf der Brillenglasrückseite befindlichen Permanentmarkierungen P1 und P2 über die scheinbaren Positionen V1 und V2 auf der Vorderseite zum Projektionszentrum der Kamera eingezeichnet, dieses ist wieder oberhalb und außerhalb der Zeichnung auf der Z-Koordinatenachse angenommen.

In den Figuren 7A-7F sind außerdem Lichtstrahlen als gepunktete oder gestrichelte Linien eingezeichnet, die von der ebenfalls oben links außerhalb der Teilzeichnungen befindlichen und deshalb nicht dargestellten exzentrischen Lichtquelle 34A ausgehen und die die Reflexionsbedingung erfüllen: Die gepunktete Linie zeigt das für einen jeweiligen Reflex 76 verursacht durch Reflexion an der Brillenglasvorderseite 72, die gestrichelte für einen jeweiligen Reflex 75 verursacht durch Reflexion auf der Brillenglasrückseite 71. Auf dem gestrichelten Linienzug für den Reflex 75 treten zwei Lichtbrechungen auf: an der (nicht weiter bezeichneten Stelle) beim Eintritt des gestrichelten Lichtstahls in das Brillenglas auf der Brillenglasvorderseite (in Fig. 7B mit 73 bezeichnet) und an der mit 75 bezeichneten Stelle, an der der Strahl nach Reflexion an der Brillenglasrückseite 71 bei 74 (nur in Teilfigur 7B extra gekennzeichnet wieder aus dem Glas tritt. Die Kamera 31 erkennt den Reflex über die Rückseite an der Stelle 75. Man kann die für diese Reflexion maßgeblichen Punkte ausrechnen, z.B. indem man das Reflexionsgesetz anwendet oder zweimal das Brechungsgesetz und implizite Gleichungen löst. Das läuft praktisch jeweils auf iterative Verfahren hinaus.

Die Teilfiguren 7A und 7B zeigen eine Dezentration und dadurch hervorgerufene Verkippung nach links, die Teilfiguren 7C und 7D eine "ideale" Positionierung und die Teilfiguren 7E und 7F eine entsprechende Dezentration und Verkippung nach rechts. Man sieht, dass sich die scheinbaren Lagen der Permanentmarkierungen grob gesagt, ähnlich, aber nicht genau wie der (von der Kamera direkt nicht erkennbare) ERP verschieben, die Lichtreflexe aber stärker verschieben. Vor allem der Reflex an der weniger gekrümmten Fläche, in den Teilfiguren mit dem Brillenglas mit positiver Brechkraft also der der Brillenglasrückseite 71, bei den Figuren mit dem Brillenglas mit negativer Brechkraft also die der Brillenglasvorderseite 72, reagieren vergleichsweise stark auf die Verkippung, die durch die Dezentration hervorgerufen wird. Es wäre genauso, wenn nur eine Verkippung ohne die Dezentration wirksam wäre: Die Reflexe reagieren relativ empfindlich darauf, während die Punkte V1 und V2 dann nur um einen Cosinus-Effekt (d.h. einen Effekt, der vom Cosinus des Verkippungswinkels abhängt), also nur vergleichsweise wenig beeinflusst werden. Die Reflexe bieten daher eine wirksame markierungsunabhängige Zusatzinformation, um die Pose des Brillenglases genau zu bestimmen, wie es für eine genau passende Stempelung notwendig ist.

Um Position und Orientierung des Brillenglases 35 zu bestimmen, enthält das Ausführungsbeispiel der Fig. 3 zusätzliche Lichtquellen 34A, 34B und 34C, deren Reflexe in einem von der Kamera 31 aufgenommenen Kamerabild bestimmt werden. Ein Lichtweg für einen derartigen Reflex an der in der Zeichnung oberen Brillenglasfläche, den die Kamera sieht, ist in Fig. 3 mit 311 bezeichnet. Das durchtretende Licht von den externen Lichtquellen 34A bis 34C läuft durch das Brillenglas 35 und wird von dem Retroreflektor 37 annähernd wieder zurück zur jeweiligen Lichtquelle reflektiert. Es stört die Bildaufnahme durch die Kamera 31 für das Licht aller Lichtquellen, einschließlich der konzentrischen Auflichtbeleuchtung 33 kaum. Außerdem kann man vorsehen, all diese Lichtquellen nacheinander jeweils nur für getrennte Kamerabilder einzuschalten, dass ihre Separation und auch die Zuordnung, welcher Reflex von welcher Lichtquelle kommt, leicht möglich wird. Bei entspiegelten Brillengläsern treten an der Brillenglasvorderseite und der Brillenglasrückseite nur schwache Reflexe auf. Weil es aber nur über die Reflexionsbedingungen in die Kamera gelangt, kann man diese Lichtquellen entsprechend hell ausgestalten.

Neben den Reflexen an der Brillenglasvorderseite können auch Reflexe an der Brillenglasrückseite auftreten. Die muss man von Reflexen an der Brillenglasvorderseite unterscheiden. Das ist besonders einfach, wenn man für die Lichtquellen 34A bis 34C eine Wellenlänge vorsieht, die im Brillenglasmaterial stark absorbiert wird. Reflexe über die Brillenglasrückseite erscheinen dadurch viel dunkler, als solche von der Vorderseite. Idealerweise ist ihre Intensität unterhalb einer Schwelle, z.B. der Detektionsschwelle. Die Kamera 31 muss dann samt ihrer Optik für das Licht der Lichtquellen 34A bis 34C empfindlich sein.

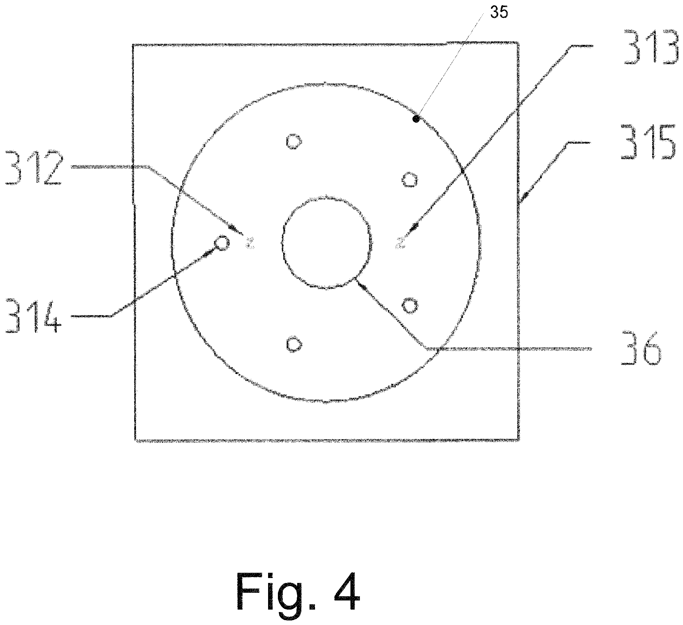

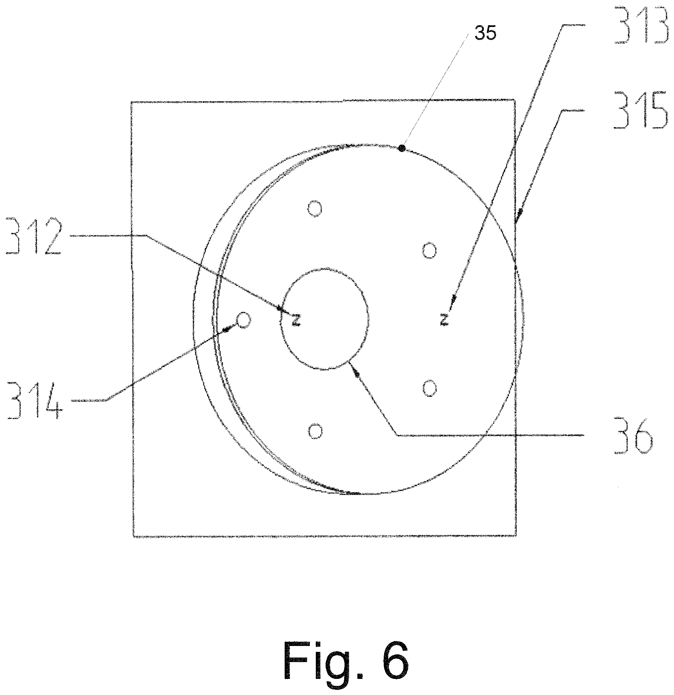

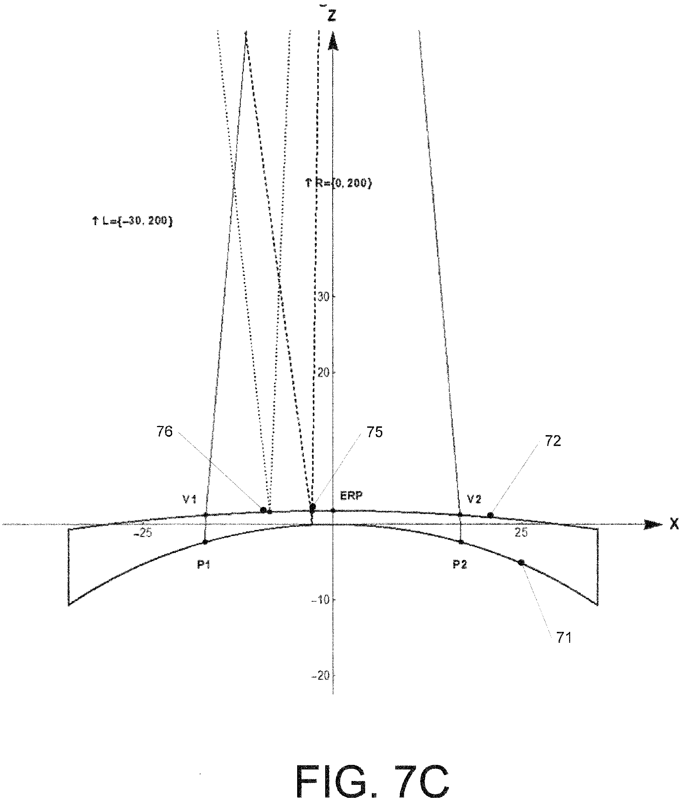

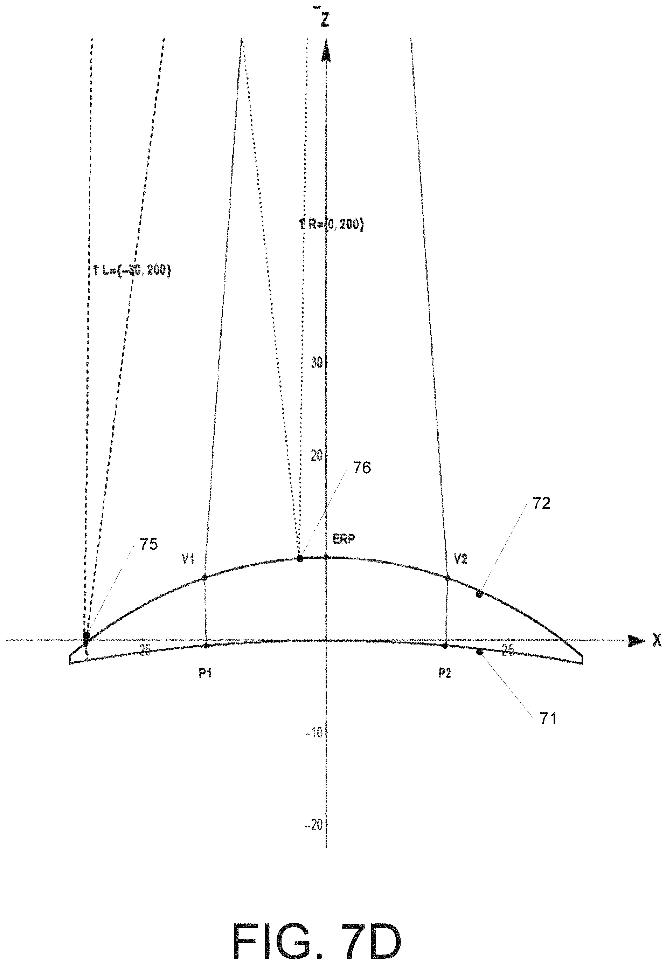

Die Fig. 4 zeigt ein Beispiel für die Lage von Vorderseiten-Reflexpunkten 314 (d.h. durch Reflexion an der Brillenglasvorderseite entstehende Reflexe) bei der Verwendung von fünf Lichtquellen, von denen drei (34A bis 34C) in Fig. 4 dargestellt sind. Das Bezugszeichen 315 bezeichnet ein Gesichtsfeld der Kamera 31. Zusätzlichen können Rückseiten-Reflexpunkte durch Reflexion an der Brillenglasrückseite entstehen. Diese sind zur Vereinfachung in Fig. 4 und auch weiter unten in Fig. 6 nicht dargestellt, werden aber später unter Bezugnahme auf die Fig. 7 erläutert.

Die Kamera 31 kann diese Reflexpunkte dann detektieren, wenn die Verkippung nicht so groß ist, dass der Reflex gar nicht mehr auf an der Brillenglasvorderseite auftritt oder er aus dem Gesichtsfeld der Kamera fällt. Wenn man sich Figur 7E mit der doppelten Verkippung vorstellt, sieht man, dass der Reflex 76 auf der Vorderseite 72 vom Glas herunterfällt. Man vergleiche die Lage des Punkts 76 in Fig. 7A, 7C und 7E. Die koaxialen Auflichtbeleuchtung 33 erzeugt ebenso einen Reflexpunkt. Dieser Reflexpunkt weist aber einen vergleichsweise geringen Kontrast auf, denn das Licht der Lichtquelle 33 ist so, dass nicht unnötig viel davon Brillenglasmaterial absorbiert wird. Ein größerer Teil des Lichts bei diesem Reflexpunkt läuft auf den Retroreflektor und von da zu der Kamera 31 zurück. Man stellt deren Empfindlichkeit so ein, dass das ganze Feld des Brillenglases dadurch "hell" erscheint. Nur wenn der Saughalter 36 etwa auf der optischen Achse 310 der Kamera 31 liegt, wird der Retroreflektor 37 von dem Saughalter 36 abgeschattet, und der Reflex kann sichtbar sein und zusätzlich zur Bestimmung von Position und/oder Orientierung herangezogen werden. Er kann dann aber auch von einem Reflex von der Brillenglasrückseite überlagert sein oder man kann ihn mit dem Reflex von der Brillenglasrückseite verwechseln. Die Reflexe der externen Lichtquellen 34A bis 34C sind besser auszuwerten, besonders wenn deren Licht vom Brillenglasmaterial so stark absorbiert wird, dass Reflexe von der Brillenglasvorder- und -rückseite deutlich unterscheidbar sind.

Ohne eine Unterscheidungsmöglichkeit über ihre scheinbare Helligkeit kann man die Reflexe von der Brillenglasvorderseite und der Brillenglasrückseite bei stark unterschiedlichen Radien auch über ihre Größe aufgrund der Defokussierung unterscheiden: Die Kamera ist so fokussiert, dass sie Punkte in der Entfernung der Permanentgravierungen optimal scharf anzeigt. Durch die Reflexion an einer aus Sicht der Kamera jeweils zu ihr hin gewölbten Fläche erscheint die externe Lichtquelle, z.B. 34A noch weiter, als sie tatsächlich ist. Das trifft vor allem für die Reflexion an der jeweils krummeren Fläche auf. Scheinbar erscheint der leuchtende Reflexpunkt dadurch etwas mehr verwischt. Dieser Effekt ist allerdings nicht besonders deutlich ausgeprägt, zumal man das Kameraobjektiv der Kamera 31 zur Erzielung einer großen Schärfentiefe stark abblendet. Ein weiteres Unterscheidungsmerkmal ist die relative Lage: Es ist bekannt, welche Gestalt das jeweilige Brillenglas hat, wie es aufgebaut ist, nur die Pose, die bestimmt werden soll, ist unbekannt. Die Recheneinrichtung 39 kann berechnen, welcher von zwei unterscheidbaren Reflexen eher zur Brillenglasvorder- und welcher zur -rückseite passt. Und wenn sich die beiden Reflexe tatsächlich ununterscheidbar dicht zusammenkommen, würde diese Situation für die anderen externen Lichtquellen nicht zutreffen. Es ist deshalb vorteilhaft, auch Lichtquellen bereitzustellen, die sich bezüglich der optischen Achse der Kamera 31 ungefähr gegenüber liegen, also z.B. in eiern Situation wie in Fig. 7A mit ungefähr 7/12 der gezeichneten Dezentration eine externe Lichtquelle an der optischen Achse gespiegelt zur Lichtquelle aus Fig. 7A. Die Lichtquelle 34C aus Figur 3 würde dann deutlich unterscheidbare Vorder- und Rückflächenreflexe liefern.

Die Lichtquellen 34A bis 34C und 33 sind bei dem Ausführungsbeispiel der Fig. 3, gesteuert durch die Recheneinrichtung 39, einzeln oder in Gruppen aktivierbar und deaktivierbar, sodass die in Fig. 4 dargestellten Reflexe nacheinander erfasst werden können und festgestellt werden kann, welcher Reflex welcher Lichtquelle 34A bis 34C, 33 zuzuordnen ist.

Durch passende Einstellung des Arbeitspunktes der Kamera 31 (Empfindlichkeit oder Belichtungszeit abhängig von der Intensität der Lichtquellen 33, 34A bis 34C und vom Transmissionsgrad des Brillenglases 35) kann dafür gesorgt werden, dass der hellste Bereich in dem Bild die Empfindlichkeitsdynamik der Kamer 31 nicht vollständig ausschöpft, sondern dass der Reflex der zusätzlichen Lichtquellen 34A bis 34C gleichzeitig in einem von der Kamera 31 aufgenommenen Bild deutlich sichtbar ist. Es können wie oben erläutert aber auch mehrere Bilder mit wahlweise aktivierten Lichtquellen aufgenommen werden.

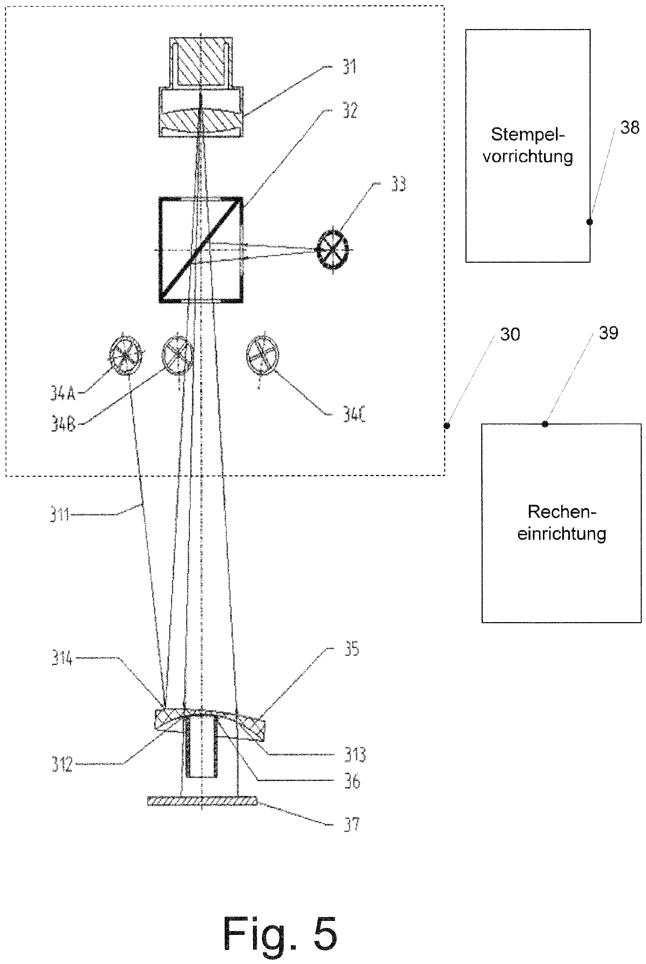

Die Lage der Reflexe 313 der Fig. 4 wird dann gemessen, um Position und Orientierung des Brillenglases 35 zu bestimmen. Die Lage der Reflexe 313 ändert sich nämlich beispielsweise bei einer Verkippung des Brillenglases 35. In Fig. 4 sieht man weiter die scheinbare Lage der Permanentmarkierungen, dort wieder mit 312 und 313 gekennzeichnet. Figuren 5 und 6 zeigen die Lage eines Brillenglases, das seitlich verschoben mit dem Saughalter angesogen und dadurch gehalten wird. In Fig. 5 ist das Brillenglas 35 auf dem Saughalter 36 deshalb in einer verkippten Stellung. Dementsprechend ändert sich auch die Lage der Reflexe 314, verglichen mit der Lage der Reflexe 314 im Falle der Fig. 4, der einer geraden Ausrichtung entspricht. Die Lage der Permanentmarkierungen 312, 313 verändert sich demgegenüber vergleichsweise wenig. Die Lage der Reflexe und die scheinbaren Lagen der Permanentmarkierungen ändern sich also in verschiedener Weise und dies wird wie erläutert zur Bestimmung von Position und Orientierung des Brillenglases verwendet. Es wird von mehreren Lichtquellen wie in der Fig. 3 und 5 ausgegangen, welche auf einem gedachten Kreis um die optische Achse 310 angeordnet sind. Um auch größere Bereiche verschieden gekrümmter Brillengläser messen zu können, kann es sinnvoll sein, mehrere gedachte Kreise mit verschiedenen Durchmessern für diese Lichtquellen vorzusehen oder sie spiralförmig um die optische Achse 310 aus Fig. 3 anzuordnen.

Bei einem sphärischen Brillenglas liegen die Reflexe bei kreisförmiger Anordnung ebenfalls auf einem gedachten Kreis, wie in Fig. 4 angedeutet. Bei einer nichtsphärischen Form ergeben sich Abweichungen von der Kreisförmigkeit der Reflexlagen.

Bei einem Brillenglas mit sphärischer Brillenglasvorderseite hängt der Durchmesser dieses gedachten Kreises vor allem vom Krümmungsradius der Brillenglasflächen ab. Wenn das zu messende Brillenglas auf dem Saughalter 36 ideal zentriert und ausgerichtet ist, d. h. der Mittelpunkt des Brillenglases (Mittelpunkt zwischen den Permanentmarkierungen) auf der optischen Achse 310 liegt und die Richtung der Flächennormale in den Mittelpunkt in Richtung der optischen Achse 310 weist, dann liegen die Reflexpunkte auf einem Kreis um diesen Mittelpunkt im von der Kamera 31 aufgenommenen Bild, und die beiden Permanentmarkierungen liegen symmetrisch dazu, wie in Fig. 4 dargestellt.

Bei einer seitlichen Verschiebung oder bei Verkippung des Brillenglases verschieben sich die Reflexe, wie in Fig. 6 veranschaulicht. Die Fig. 6 zeigt wie Fig. 4 nur die Vorderflächenreflexe. Die Verschiebung folgt dem Abbildungsgesetz über einen gewölbten Spiegel mit der Form der Brillenglasvorderfläche. Die Verschiebung der Rückflächenreflexe infolge einer Verkippung folgt einem ähnlichen Gesetz, allerdings sind dabei auch noch zwei Brechungen am Brillenglas wirksam.

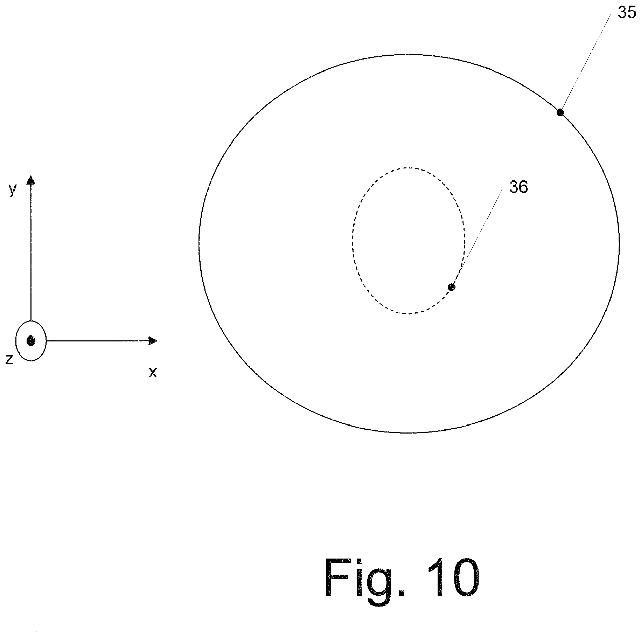

Für die folgenden weiterführenden Erklärungen werden Achsenbezeichnungen verwendet, die in Fig. 10 dargestellt sind. Fig. 10 zeigt eine Draufsicht auf das Brillenglas 35 und den Halter 36 entlang der optischen Achse 310. Die z-Achse verläuft parallel zu der optischen Achse 310 der Fig. 3, und die x- und y-Achsen sind senkrecht dazu, im Wesentlichen in einer Glasebene, die näherungsweise eine Ebene des Brillenglases beschreibt, wenn das Brillenglas ohne Verkippung auf dem Halter 36 liegt. Ein Versatz, des Brillenglases 35 in der xy-Ebene erkennt man daran, dass die scheinbare Lage der Permanentmarkierungen verschoben ist. Eine Verkippung um die x- oder y-Achse verschiebt hauptsächlich die Lage der Reflexpunkte, während sich die scheinbare Lage der Permanentmarkierungen vergleichsweise wenig ändert. Zudem hängt die Lage der Permanentmarkierungen noch von der Verdrehung um die z-Achse ab. Es können also insgesamt der Versatz entlang der x- und y-Achse, Verkippungen um die x- und y-Achse und die Verdrehung um die z-Achse bestimmt werden, indem die mit der Kamera 31 erfasste Lage der Reflexe (314) sowie die scheinbare Lage der Permanentmarkierungen ausgewertet wird. Diese Auswertung kann mittels der Recheneinrichtung 39 über ein entsprechendes Computerprogramm vorgenommen werden. In der Berechnung spielen die Lagen der externen Lichtquellen 30A...30F, die optischen Daten der Bildaufnahmeeinrichtung 30, die bekannten Daten des Brillenglases eine Rolle (dargestellt in seinem eigenen, mit dem Brillengas verbundenen Koordinatensystem, dessen Lage und Orientierung zum Weltkoordinatensystem der Bildaufnahmeeinrichtung unbekannt ist und die erfindungsgemäß bestimmt werden soll). Insbesondere spielt die Lage der Permanentmarkierungen und bei Markierungen auf der Brillenglasrückseite auch der Brechungsindex des Brillenglases eine Rolle. Nachdem die Position und Orientierung des Brillenglases 35 bestimmt ist, kann mittels einer Stempelvorrichtung 38 eine Stempelung auf dem Brillenglas aufgebracht werden. Die Stempelvorrichtung 38 ist dabei in dem dargestellten Beispiel als Inkjet-Druckkopf ausgestaltet.

Bei der Stempelung mit einem Tintenstrahldruckverfahren (Inkjet-Verfahren) durch die Stempelvorrichtung 38 ist dabei die Verkippung weniger wichtig, denn der Druckkopf schwebt beim Drucken über dem Brillenglas. Für die genaue Bestimmung des Versatzes (Lage in x- und y-Richtung) kommt es bei Gläsern, bei denen die Permanentmarkierungen auf der Brillenglasrückseite liegen (dem Saughalter 36 zugewandt) durchaus an, denn wenn das Brillenglas anders verkippt ist, verändert sich die scheinbare Lage der Permanentmarkierungen wie unter Bezugnahme auf die Fig. 7 erläutert wurde. Dieser Effekt ist besonders ausgeprägt für Brillengläser mit großer negativer optischer Wirkung, also für Gläser beispielsweise mit -10 dpt sphärisch oder zylindrisch, denn dort ist der Weg des Lichtstrahls im Brillenglas relativ lang, was zu einer größeren Lageänderung in Abhängigkeit von der Verkippung führt.

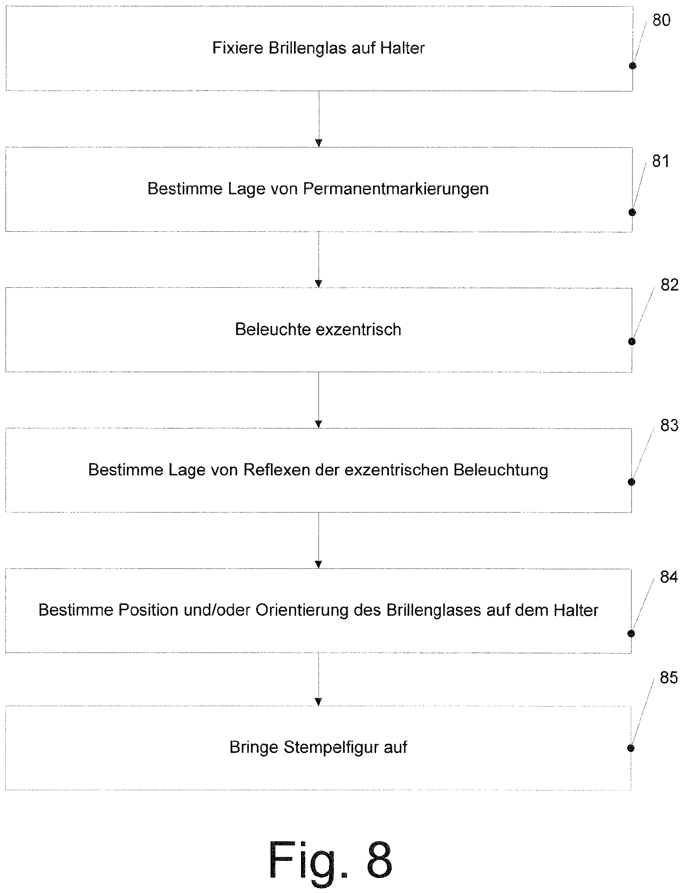

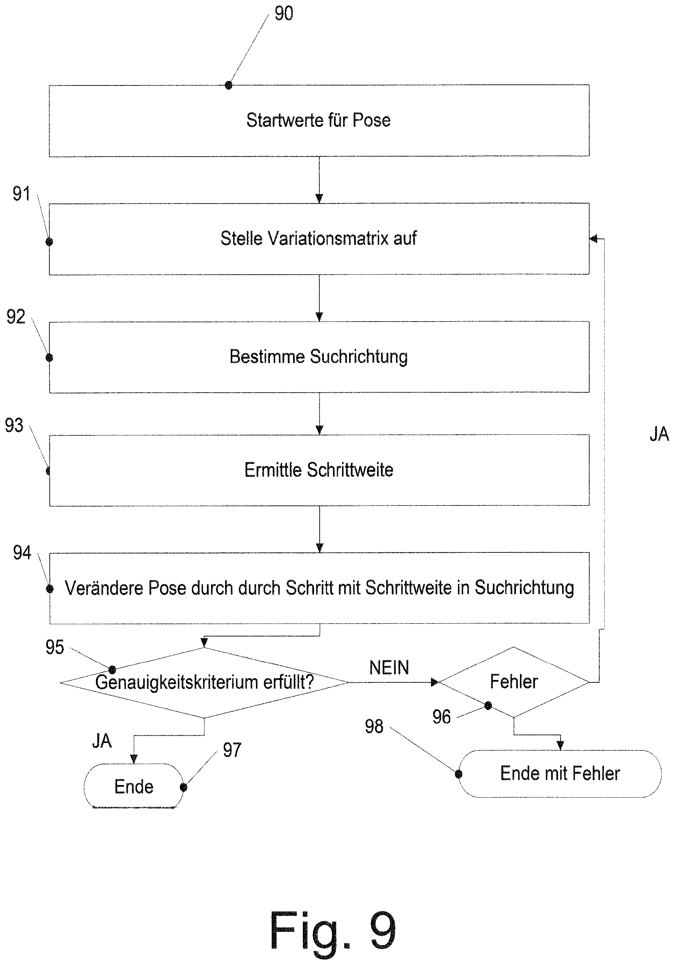

Die Bestimmung von Position und/oder Orientierung des Brillenglases 35 auf dem Saughalter 36 wird nun unter Bezugnahme auf die Figuren 8 und 9 näher erläutert. Die Figuren 8 und 9 zeigen Flussdiagramme von Verfahren, die in der Vorrichtung der Fig. 3 gesteuert durch die Recheneinrichtung 39 durchführbar sind. Das Verfahren der Fig. 8 veranschaulicht dabei den allgemeinen Verfahrensablauf, während die Fig. 9 ein iteratives Verfahren zum Bestimmen der oben unter Bezugnahme auf Fig. 10 erläuterten Parameter (Versatz in x- und y-Richtung, Verkippung um x- und y-Achse sowie Verdrehung um z-Achse) zeigt.

In Schritt 80 wird das Brillenglas 35 auf dem Halter 36 fixiert. In Schritt 81 wird die scheinbare Lage von Permanentmarkierungen bestimmt, wobei hierzu, wie erläutert, die Lichtquelle 33 eine koaxiale Auflichtbeleuchtung bereitstellt. In Schritt 82 wird das Brillenglas 36 exzentrisch durch eine oder mehrere der Lichtquellen 34A bis 34C beleuchtet, z.B. nacheinander oder in Gruppen, so dass eindeutig entscheidbar ist, welcher Reflex von welcher Lichtquelle herrührt. Reflexe, bei denen nicht entscheidbar ist, ob sie von der Vorder- oder Rückseite kommen, bleiben unberücksichtigt, wenn man mehr als eine externe Lichtquelle hat, deren Reflexe sichtbar sind. In Schritt 83 wird die Lage von Reflexen, die durch die exzentrische Beleuchtung hervorgerufen wurden, bestimmt, indem das von der Kamera 31 aufgenommene Bild bzw. die aufgenommenen Bilder entsprechend ausgewertet wird bzw. werden. Man kann einen Reflex daran erkennen, dass es eine räumlich kleine und helle Erscheinung ist. Es gibt viele Möglichkeiten, so einen Reflex auszuwerten, wenn er auf mehr als einen Kamerabildpunkt (Pixel) fällt: Dann könnte man z.B. den Schwerpunkt aller Pixel in der Umgebung nehmen, die einen Schwellwert überschreiten oder eine Besteinpassung einer Intensitätsverteilung, wie man sie für Lichtquellen erwartet, die in der virtuellen Entfernung der virtuellen Lage der Lichtquelle nach Reflexion an einem entsprechend gekrümmten Spiegel liegen usw.

In Schritt 84 wird dann Position und/oder Orientierung des Brillenglases 35 auf dem Halter 36 berechnet, z.B. iterativ wie später unter Bezugnahme auf Fig. 9 beschrieben. Basierend auf diesen Ergebnissen kann dann beispielsweise in Schritt 85 von der Stempelvorrichtung 38 eine Stempelfigur auf dem Brillenglas aufgebracht werden. Weil das Brillenglas in den meisten Fällen nicht in der richtigen Orientierung gehalten ist, druckt man eine verdrehte und um die Dezentrierung des Glases auf dem Halter verschobene Stempelfigur. Wenn nötig, berücksichtigt man auch die Verzerrungen der Inkjetfigur wegen der verschiedenen Flugzeiten der Inkjet-Tröpfchen, die sich daraus ergeben, dass die verschiedenen Punkte der zu druckenden Figur verschiedenen Abstand zur Glasvorderfläche haben.

Die Fig. 9 zeigt ein iteratives Verfahren zur Bestimmung von Lage und Orientierung, welche ein Beispiel für die Implementierung des Schrittes 84 der Fig. 8 ist.

Das Verfahren der Figur 9 benutzt ein Teilverfahren (in Fig. 9 nicht explizit dargestellt), welches im Verlauf des Verfahrens der Fig. 9 wiederholt verwendet wird. Dieses Teilverfahren wird im Folgenden kurz als UP bezeichnet und kann als entsprechendes Unterprogramm in der Recheneinrichtung 39 implementiert sein. Dieses Teilverfahren berechnet zu einer im Verlauf des Verfahrens der Fig. 9 ermittelten Pose des Brillenglases die erwartete scheinbare Lage der Permanentmarkierungen und erwartete Lagen der Reflexe, die durch die exzentrische Beleuchtung verursacht werden (getrennt nach Reflexen von der Brillenglasvorder- und -rückseite). UP macht also Strahldurchrechnungen. Wie aus den Fig. 7A-7F ersichtlich, beruhen diese auf einfacher Strahlenoptik. UP vergleicht ferner die berechnete erwartete scheinbare Lage der Permanentmarkierungen und die erwartete Lage der Reflexe mit den entsprechenden in den Schritten 81 und 83 erfassten Lagen. Als Ergebnis wird ein Fehlervektor von dem UP zurückgegeben, der die sich bei diesem Vergleich ergebenden Abweichungen kennzeichnet.

Mit aktueller Pose wird bei dem Verfahren der Fig. 9 diejenige Pose bezeichnet, die einem momentanen Stand der iterativen Berechnung in Fig. 9 entspricht.

Das Verfahren der Fig. 9 beginnt in Schritt 90 mit einer Initialisierung, bei der Startwerte für die aktuelle Pose des Brillenglases gesetzt werden: Die Startwerte für Dezentration (Versatz in der X-Y-Ebene) und Verdrehung um die Z-Achse können beispielsweise entsprechend der Erfassung der scheinbaren Lagen der Permanentmarkierungen aus Schritt 81 erfolgen:. Die Dezentration bestimmt man in diesem Fall aus der Mitte der in die XY-Ebene eines ideal positionierten Brillenglases projizierten erkannten Permanentmarkierungen, verglichen mit der Lage der Achse des Halters in der X-Y-Ebene. Die Verdrehung um die Z-Achse des Weltkoordinatensystems bestimmt man aus der Richtung von der linken zur rechten Permanentmarkierung in der vorgenannten Ebene. Die Verkippung nimmt man beispielsweise so an, wie sie sich aus der Haltercharakteristik in diesem Haltepunkt ergibt, oder sie wird als Startwert auf 0 gesetzt.

In Schritt 91 werden alle Parameter (Dezentration, Verdrehung, Verkippung) der aktuellen Pose um kleine Werte variiert und es wird mit UP berechnet, welchen Einfluss das auf den Fehlervektor hat. Das Ergebnis ist die Variationsmatrix. Diese gibt an, wie sich der Fehlervektor in Abhängigkeit von den kleinen Variationen der Parameter ändert.

Im Schritt 92 wird die Pseudoinverse (siehe z.B. Wikipedia-Artikel "Pseudoinverse", Stand 16.07.2017) der Variationsmatrix berechnet, zusammen mit dem Fehlervektor aus Schritt 91 ergibt das die Suchrichtung, d.h. eine Richtung, in der die Parameter in dem nächsten Schritt geändert werden.

Im Schritt 93 ermittelt man für verschiedene Schrittweiten w das Minimum der (gewichteten) Summe der Quadrate der Elemente des Fehlervektors, wenn die aktuellen Parameter der aktuellen Pose gegenüber dem Stand unmittelbar vor Schritt 91 um w*Suchrichtung verändert werden. Idealerweise liegt das Minimum bei w=1, es kann sich aber auch ein anderes Ergebnis für w ergeben. Zur Bestimmung von w wird bei dem vorliegenden Ausführungsbeispiel das Brent-Verfahren und innerhalb davon immer wieder UP verwendet. (Siehe z.B. Press et. al, Numerical Recipes, Second Edition (1992), pp394ff).

In Schritt 94 aktualisiert man die aktuelle Pose auf diejenige für das soeben gefundene Minimum, d.h. die Pose wird um w*Suchrichtung für das w, bei der sich das Minimum ergab, verändert.

In Schritt 95 wird ein Genauigkeitskriterium überprüft, ob die z.B. gewichtete Quadratsumme der durch den Fehlervektor angegebenen Abweichungen unter eine vorgegebene Schwelle gefallen ist. Allgemein gibt das Genauigkeitskriterium an, wie gut die aktuelle Pose mit den mit den gemessenen Größen zusammenpasst. Wenn das Genauigkeitskriterium erfüllt ist (z.B. die gewichtete Quadratsumme unter der Schwelle ist oder gar Null ist) ist, wird das Verfahren in Schritt 97 beendet und die letzte aktuelle Pose gilt genau genug bestimmt. Die letzte aktuelle Pose stellt dann das Ergebnis des Verfahrens der Fig. 9 dar.

Falls die Prüfung aus Schritt 95 ergibt, dass das das Genauigkeitskriterium noch nicht erreicht ist, werden in Schritt 96 noch diverse Fehlerkriterien überprüft: Dabei wird überprüft, ob die Durchläufe des Verfahrens noch zu Verbesserungen der Pose (Verringerung des Fehlerkriteriums) geführt haben oder, ob der Schritt 91 schon öfter als eine vorgegebene Maximalzahl ausgeführt wurde. Außerdem kann es in den übrigen Verfahrensschritten und auch in dem UP noch Fehlerbedingungen geben, die das Verfahren abfangen muss, z.B. Posen die gar nicht auftreten können.

Gegebenenfalls wird das Verfahren in Schritt 98 mit einer Fehlermeldung abgebrochen. Ansonsten springt das Verfahren für einen erneuten Durchlauf zurück zu Schritt 91.

Wenn die Vorrichtung mehr als eine Kamera hat, wertet man jedes Bild für sich aus, erkennt darin die scheinbaren Lagen der Permanentmarkierungen und der zusätzlichen Reflexionspunkte. Dann wertet man alle diese optischen Konfigurationen gemeinsam in einer Minimumsuche wie oben beschrieben aus und gelangt so zu der Lage und Orientierung des Brillenglases in der Vorrichtung (bis auf Mess- und die Abbruchfehler, die bei solchen approximativen Verfahren immer auftreten).

Mit den so bestimmten Daten wird dann in Schritt 85 die Stempelung an der korrekten Position angebracht, indem entsprechende Koordinaten auf der Glasoberfläche berechnet werden, an denen die Stempelung anzubringen ist. Aus den scheinbaren Lagen der Permanentmarkierungen wie unter Bezugnahme auf Fig. 7 erläutert, kann unter Hinzunahme der Reflexe die tatsächliche Lage bestimmt werden.

**Patentansprüche**

1. Verfahren zur Bestimmung von Position und/oder Orientierung eines Permanentmarkierungen aufweisenden Brillenglases (35) auf einem Halter (36), umfassend:

   Bereitstellen einer erfassten scheinbaren Lage der Permanentmarkierungen auf dem Brillenglas (35), wobei sich die scheinbare Lage der Permanentmarkierungen von einer realen Lage der Permanentmarkierungen aufgrund von Lichtbrechung durch das Brillenglas unterscheidet,
   Bestimmen der Position und/oder der Orientierung des Brillenglases auf Basis der scheinbaren Lage der Permanentmarkierungen und einer markierungsunabhängigen Zusatzinformation,
   **dadurch gekennzeichnet, dass** die markierungsunabhängige Zusatzinformation eine Haltecharakteristik des Halters (36), die zu einer bestimmten Position und/oder Orientierung des Brillenglases führt, und mindestens einen erfassten Reflex umfasst, wobei das Bestimmen von Position und/oder Orientierung des Brillenglases (35) eine iterative Berechnung von Position und/oder Orientierung des Brillenglases (35) umfasst, die iterative Berechnung auf Basis der Haltecharakteristik und der erfassten scheinbaren Lagen der Permanentmarkierungen durchgeführt wird und ferner auf Basis von mindestens einem erfassten Reflex erfolgt, der einer jeweiligen Lichtquelle zugeordnet werden kann,
   wobei die iterative Berechnung in jeweiligen Iterationsschritten einen Vergleich zwischen einer erwarteten Lage des Brillenglases und einer erfassten scheinbaren Lage der Permanentmarkierungen und Lage des mindestens einen Reflexes umfasst.

2. Verfahren nach Anspruch 1,
   **gekennzeichnet durch**

   Erfassen der scheinbaren Lage der Permanentmarkierungen auf dem Brillenglas (35), exzentrisches Beleuchten des Brillenglases (35),
   Erfassen einer Lage mindestens eines durch das exzentrische Beleuchten hervorgerufenen Reflexes (40A bis 40F; 60A bis 60F) auf dem Brillenglas,
   wobei die markierungsunabhängige Zusatzinformation die Lage des mindestens einen Reflexes umfasst.

3. Verfahren nach Anspruch 2, **dadurch gekennzeichnet, dass** das Erfassen der scheinbaren Lage des mindestens einen Reflexes ein mehrmaliges Erfassen bei einer Bewegung des Brillenglases (35) umfasst.

4. Verfahren nach Anspruch 2 oder 3, **dadurch gekennzeichnet, dass** das exzentrische Beleuchten ein exzentrisches Beleuchten mit mehreren Lichtquellen zum Erzeugen mehrerer Reflexe umfasst.

5. Verfahren nach Anspruch 4, **dadurch gekennzeichnet, dass** die mehreren Lichtquellen abwechselnd einzeln oder in Gruppen aktiviert werden.

6. Verfahren nach einem der Ansprüche 2 bis 5, **dadurch gekennzeichnet, dass** das Erfassen der scheinbaren Lage der Permanentmarkierungen mit einer ersten Lichtwellenlänge und das Erfassen der Lage des mindestens einen Reflexes mittels Beleuchtung mit einer zweiten Lichtwellenlänge erfolgt, wobei das Brillenglas (35) für die zweite Lichtwellenlänge eine höhere Absorption aufweist als für die erste Lichtwellenlänge.

7. Verfahren nach einem der Ansprüche 1 bis 6, **dadurch gekennzeichnet, dass** das Erfassen der scheinbaren Lage von Permanentmarkierungen und/oder das Erfassen der Lage des mindestens einen Reflexes aus mehreren Beobachtungsrichtungen erfolgt/erfolgen.

8. Verfahren nach einem der Ansprüche 1 bis 7, **dadurch gekennzeichnet, dass** die markierungsunabhängige Zusatzinformation berechnete oder experimentell ermittelte Lageeigenschaften von verschiedenen Formen von Brillengläsern auf dem Halter (36) umfasst.

9. Computerprogramm mit einem Programmcode, der, wenn er auf einem Prozessor ausgeführt wird, bewirkt, dass das Verfahren nach einem der Ansprüche 1 bis 8 durchgeführt wird.

10. Vorrichtung zur Bestimmung von Position und/oder Orientierung eines Permanentmarkierungen aufweisenden Brillenglases auf einem Halter, umfassend:

    eine Bereitstellungseinrichtung zum Bereitstellen einer erfassten scheinbaren Lage der Permanentmarkierungen auf dem Brillenglas (35), wobei sich die scheinbare Lage der Permanentmarkierungen von einer realen Lage der Permanentmarkierungen aufgrund von Lichtbrechung durch das Brillenglas unterscheidet,
    eine Recheneinrichtung (39) zum Bestimmen von Position und/oder Orientierung des Brillenglases auf Basis der scheinbaren Lage der Permanentmarkierungen und einer markierungsunabhängigen Zusatzinformation,

**dadurch gekennzeichnet, dass** die markierungsunabhängige Zusatzinformation eine Haltecharakteristik des Halters (36), die zu einer bestimmten Position und/oder Orientierung des Brillenglases führt, und mindestens einen erfassten Reflex umfasst, und dass die Recheneinrichtung (39) eingerichtet ist, das Bestimmen von Position und/oder Orientierung des Brillenglases (35) basierend auf einer iterative Berechnung von Position und/oder Orientierung des Brillenglases (35) durchzuführen, wobei die Recheneinrichtung eingerichtet ist, die iterative Berechnung auf Basis der Haltecharakteristik, der erfassten scheinbaren Lagen der Permanentmarkierungen und auf Basis von mindestens einem erfassten Reflex durchzuführen, wobei der mindestens eine Reflex einer jeweiligen Lichtquelle zugeordnet werden kann, wobei die iterative Berechnung in jeweiligen Iterationsschritten einen Vergleich zwischen einer erwarteten Lage des Brillenglases und einer erfassten scheinbaren Lage der Permanentmarkierungen und Lage des mindestens einen Reflexes umfasst.

11. Vorrichtung nach Anspruch 10, wobei die Recheneinrichtung weiter eingerichtet ist, ein Verfahren gemäß einem der Ansprüche 2 bis 8 durchzuführen.

12. Vorrichtung nach Anspruch 10 oder 11, **gekennzeichnet durch** eine Erfassungseinrichtung zum Erfassen der scheinbaren Lage der Permanentmarkierungen auf dem Brillenglas (35).

13. Vorrichtung nach Anspruch 12, **gekennzeichnet durch**

eine Beleuchtungseinrichtung (34A-34C) zum exzentrischen Beleuchten des Brillenglases, wobei die Erfassungseinrichtung (31) weiter eingerichtet ist, eine Lage mindestens eines durch ein exzentrisches Beleuchten durch die Beleuchtungseinrichtung hervorgerufenen Reflexes zu erfassen, wobei die markierungsunabhängige Zusatzinformation die Lage des mindestens einen Reflexes umfasst.

14. Vorrichtung nach Anspruch 13, **dadurch gekennzeichnet, dass** die Beleuchtungseinrichtung (34A-34C) eine Vielzahl von exzentrisch zu einer optischen Achse der Erfassungseinrichtung angeordneten Lichtquellen umfasst, wobei die Recheneinrichtung (39) bevorzugt eingerichtet ist, die Lichtquellen alternativ zu aktivieren.

**Claims**

1. Method for determining the position and/or orientation of a spectacle lens (35) having permanent marks on a holder (36), comprising:

providing a captured apparent location of the permanent marks on the spectacle lens (35), wherein the apparent location of the permanent marks differs from a real location of the permanent marks on account of light refraction by the spectacle lens, determining the position and/or orientation of the spectacle lens on the basis of the apparent location of the permanent marks and mark-independent additional information, **characterized in that** the mark-dependent additional information comprises a holding characteristic of the holder (36), said holding characteristic resulting in a specific position and/or orientation of the spectacle lens, and at least one captured reflection, wherein determining the position and/or orientation of the spectacle lens (35) comprises an iterative calculation of the position and/or orientation of the spectacle lens (35), the iterative calculation is carried out on the basis of the holding characteristic and the captured apparent location of the permanent marks and is furthermore carried out on the basis of at least one captured reflection which can be assigned to a respective light source, wherein the iterative calculation comprises in respective iteration steps a comparison between an expected location of the spectacle lens and a captured apparent location of the permanent marks and location of the at least one reflection.

2. Method according to Claim 1, **characterized by**

capturing the apparent location of the permanent marks on the spectacle lens (35), eccentrically illuminating the spectacle lens (35), capturing a location of at least one reflection (40A to 40F; 60A to 60F) on the spectacle lens brought about by the eccentric illumination, wherein the mark-independent additional information comprises the location of the at least one reflection.

3. Method according to Claim 2, **characterized in that** capturing the apparent location of the at least one reflection comprises repeated capturing during a movement of the spectacle lens (35).

4. Method according to Claim 2 or 3, **characterized in that** the eccentric illumination comprises eccentrically illuminating using a plurality of light sources for producing a plurality of reflections.

5. Method according to Claim 4, **characterized in that** the plurality of light sources are activated alternately individually or in groups.

6. Method according to one of Claims 2 to 5, **characterized in that** capturing the apparent location of the permanent marks is carried out with a first light wavelength and capturing the location of the at least one reflection is carried out by means of illumination with a second light wavelength, wherein the spectacle lens (35) has a higher absorption for the second light wavelength than for the first light wavelength.

7. Method according to one of Claims 1 to 6, **characterized in that** capturing the apparent location of permanent marks and/or capturing the location of the at least one reflection takes place from a plurality of observation directions.

8. Method according to one of Claims 1 to 7, **characterized in that** the mark-independent additional information comprises calculated or experimentally ascertained location properties of different shapes of spectacle lenses on the holder (36).

9. Computer program comprising a program code which, when executed on a processor, causes the method according to one of Claims 1 to 8 to be carried out.

10. Apparatus for determining the position and/or orientation of a spectacle lens having permanent marks on a holder, comprising:

> a provision device for providing a captured apparent location of the permanent marks on the spectacle lens (35), wherein the apparent location of the permanent marks differs from a real location of the permanent marks on account of light refraction by the spectacle lens,
> a computing device (39) for determining the position and/or orientation of the spectacle lens on the basis of the apparent location of the permanent marks and mark-independent additional information,
> **characterized in that** the mark-dependent additional information comprises a holding characteristic of the holder (36), said holding characteristic resulting in a specific position and/or orientation of the spectacle lens, and at least one captured reflection, and **in that** the computing device (39) is configured to carry out determining the position and/or orientation of the spectacle lens (35) on the basis of an iterative calculation of the position and/or orientation of the spectacle lens (35),

wherein the computing device is configured to carry out the iterative calculation on the basis of the holding characteristic, the captured apparent locations of the permanent marks and on the basis of at least one captured reflection, wherein the at least one reflection can be assigned to a respective light source,
wherein the iterative calculation comprises in respective iteration steps a comparison between an expected location of the spectacle lens and a captured apparent location of the permanent marks and location of the at least one reflection.

11. Apparatus according to Claim 10, wherein the computing device is further configured to carry out a method according to any of Claims 2 to 8.

12. Apparatus according to Claim 10 or 11, **characterized by** a capturing device for capturing the apparent location of the permanent marks on the spectacle lens (35).

13. Apparatus according to Claim 12, **characterized by**

> an illumination device (34A-34C) for eccentrically illuminating the spectacle lens,
> wherein the capturing device (31) is further configured to capture a location of at least one reflection brought about by eccentric illumination by the illumination device, wherein the mark-independent additional information comprises the location of the at least one reflection.

14. Apparatus according to Claim 13, **characterized in that** the illumination device (34A-34C) comprises a multiplicity of light sources arranged eccentrically with respect to an optical axis of the capturing device, wherein the computing device (39) is preferably configured to activate the light sources alternatively.

**Revendications**

1. Procédé permettant de déterminer la position et/ou l'orientation d'un verre de lunettes (35), présentant des marques permanentes, sur un support (36), comprenant les étapes consistant à :

> fournir une position apparente détectée des marques permanentes sur le verre de lunettes (35), la position apparente des marques permanentes différant d'une position réelle des marques permanentes en raison de la réfraction de la lumière à travers le verre de lunettes,
> déterminer la position et/ou l'orientation du verre de lunettes sur la base de la position apparente des marques permanentes et d'une information complémentaire indépendante des marques, **caractérisé en ce que** l'information complémentaire dépendante des marques comprend une caractéristique de maintien du support (36) qui conduit à une position et/ou orientation déterminée(s) du verre de lunettes, et comprend au moins un reflet détecté,

dans lequel la détermination de la position et/ou de l'orientation du verre de lunettes (35) comprend un calcul itératif de la position et/ou de l'orientation du verre de lunettes (35), le calcul itératif est effectué sur la base de la caractéristique de maintien et des positions apparentes détectées des marques permanentes, et a en outre lieu sur la base d'au moins un reflet détecté qui peut être attribué à une source de lumière respective,

dans lequel le calcul itératif comprend dans des étapes d'itération respectives une comparaison entre une position attendue du verre de lunettes et une position apparente détectée des marques permanentes et la position dudit au moins un reflet.

2. Procédé selon la revendication 1, **caractérisé par** les étapes consistant à :

   détecter la position apparente des marques permanentes sur le verre de lunettes (35),
   éclairer de manière excentrique le verre de lunettes (35),
   détecter une position d'au moins un reflet (40A à 40F ; 60A à 60F) dû à l'éclairage excentrique sur le verre de lunettes, l'information complémentaire indépendante des marques comprenant la position dudit au moins un reflet.

3. Procédé selon la revendication 2, **caractérisé en ce que** la détection de la position apparente dudit au moins un reflet comprend une détection multiple lors d'un déplacement du verre de lunettes (35).

4. Procédé selon la revendication 2 ou 3, **caractérisé en ce que** l'éclairage excentrique comprend un éclairage excentrique par plusieurs sources de lumière pour générer plusieurs reflets.

5. Procédé selon la revendication 4, **caractérisé en ce que** les plusieurs sources de lumière sont activées alternativement de manière individuelle ou en groupes.

6. Procédé selon l'une quelconque des revendications 2 à 5, **caractérisé en ce que** la détection de la position apparente des marques permanentes est effectuée à une première longueur d'onde de lumière et la détection de la position dudit au moins un reflet est effectuée au moyen d'un éclairage à une deuxième longueur d'onde de lumière, le verre de lunettes (35) présentant pour la deuxième longueur d'onde de lumière une absorption plus élevée que pour la première longueur d'onde de lumière.

7. Procédé selon l'une quelconque des revendications 1 à 6, **caractérisé en ce que** la détection de la position apparente de marques permanentes et/ou la détection de la position dudit au moins un reflet est/sont effectuée(s) à partir de plusieurs directions d'observation.

8. Procédé selon l'une quelconque des revendications 1 à 7, **caractérisé en ce que** l'information complémentaire indépendante des marques comprend des propriétés de position, calculées ou établies expérimentalement, de différentes formes de verres de lunettes sur le support (36).

9. Programme informatique comprenant du code programme qui, lorsqu'il est exécuté sur un processeur, provoque l'exécution du procédé selon l'une quelconque des revendications 1 à 8.

10. Dispositif permettant de déterminer la position et/ou l'orientation d'un verre de lunettes, présentant des marques permanentes, sur un support, comprenant :

    un moyen de fourniture destiné à fournir une position apparente détectée des marques permanentes sur le verre de lunettes (35), la position apparente des marques permanentes différant d'une position réelle des marques permanentes en raison d'une réfraction de lumière à travers le verre de lunettes,
    un moyen de calcul (39) destiné à déterminer la position et/ou l'orientation du verre de lunettes sur la base de la position apparente des marques permanentes et d'une information supplémentaire indépendante des marques,
    **caractérisé en ce que** l'information complémentaire dépendante des marques comprend une caractéristique de maintien du support (36) qui conduit à une position et/ou orientation déterminée(s) du verre de lunettes, et comprend au moins un reflet détecté, et **en ce que** le moyen de calcul (39) est conçu pour effectuer la détermination de la position et/ou de l'orientation du verre de lunettes (35) sur la base d'un calcul itératif de la position et/ou de l'orientation du verre de lunettes (35),
    dans lequel le moyen de calcul est conçu pour effectuer le calcul itératif sur la base de la caractéristique de maintien, des positions apparentes détectées des marques permanentes et sur la base d'au moins un reflet détecté, ledit au moins un reflet pouvant être attribué à une source de lumière respective,

dans lequel le calcul itératif dans des étapes d'itération respectives comprend une comparaison entre une position attendue du verre de lunettes et une position apparente détectée des marques permanentes et la position dudit au moins un reflet.

11. Dispositif selon la revendication 10, dans lequel le moyen de calcul est en outre conçu pour effectuer un procédé selon l'une quelconque des revendications 2 à 8.

12. Dispositif selon la revendication 10 ou 11, **caractérisé par** un moyen de détection servant à détecter la position apparente des marques permanentes sur le verre de lunettes (35).

13. Dispositif selon la revendication 12, **caractérisé par**

un moyen d'éclairage (34A à 34C) destiné à l'éclairage excentrique du verre de lunettes,
dans lequel le moyen de détection (31) est en outre conçu pour détecter une position d'au moins un reflet dû à un éclairage excentrique par le moyen d'éclairage, l'information supplémentaire indépendante des marques comprenant la position dudit au moins un reflet.

14. Dispositif selon la revendication 13, **caractérisé en ce que** le moyen d'éclairage (34A à 34C) comprend une pluralité de sources de lumière disposées de manière excentrique par rapport à un axe optique du moyen de détection, le moyen de calcul (39) étant de préférence conçu pour activer les sources de lumière en alternance.

Fig. 1A

Fig. 1B

Fig. 1C

Fig. 1D

EP 3 708 993 B1

Verschiebungen in X-Richtung (2mm/Schritt)

Fig. 2A

EP 3 708 993 B1

Fig. 2B

Fig. 3

Fig. 4

31

32

33

34A

34B

34C

311

314

312

35

313

36

37

Stempel-vorrichtung

38

30

39

Rechen-einrichtung

# Fig. 5

Fig. 6

FIG. 7A

# FIG. 7B

FIG. 7C

FIG. 7D

FIG. 7E

FIG. 7F

Fixiere Brillenglas auf Halter    /80

Bestimme Lage von Permanentmarkierungen    /81

Beleuchte exzentrisch    /82

Bestimme Lage von Reflexen der exzentrischen Beleuchtung    /83

Bestimme Position und/oder Orientierung des Brillenglases auf dem Halter    /84

Bringe Stempelfigur auf    /85

# Fig. 8

90

Startwerte für Pose

91

Stelle Variationsmatrix auf

92

Bestimme Suchrichtung

93

Ermittle Schrittweite

94

Verändere Pose durch durch Schritt mit Schrittweite in Suchrichtung

95

Genauigkeitskriterium erfüllt?

NEIN

Fehler

96

JA

JA

97

Ende

98

Ende mit Fehler

# Fig. 9

# Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1646855 B1
- EP 2597451 A2
- DE 10300777 A1

- DE 102007037730 A1
- US 2014352885 A1
- US 2007091262 A1
- DE 102014005281 A1
- DE 102013219838 A1

**In der Beschreibung aufgeführte Nicht-Patentliteratur**

- **PRESS.** Numerical Recipes. 1992

- **PRESS.** Numerical Recipes. 1992, 394ff